(19) Europäisches Patentamt
European Patent Office
Office européen des brevets

(11) **EP 2 774 195 B1**

(12) **FASCICULE DE BREVET EUROPEEN**

(45) Date de publication et mention de la délivrance du brevet:
**13.12.2017 Bulletin 2017/50**

(21) Numéro de dépôt: **12794406.4**

(22) Date de dépôt: **30.10.2012**

(51) Int Cl.:
*H01M 4/04* [(2006.01)]   *H01M 10/0525* [(2010.01)]
*H01M 4/1391* [(2010.01)]   *C25D 13/02* [(2006.01)]
*C25D 13/12* [(2006.01)]   *C25D 13/22* [(2006.01)]

(86) Numéro de dépôt international:
**PCT/FR2012/052505**

(87) Numéro de publication internationale:
**WO 2013/064777 (10.05.2013 Gazette 2013/19)**

(54) **PROCEDE DE FABRICATION DE MICRO-BATTERIES EN COUCHES MINCES A IONS DE LITHIUM, ET MICRO-BATTERIES OBTENUES PAR CE PROCEDE**

VERFAHREN ZUR HERSTELLUNG VON DÜNNSCHICHT-LITHIUMIONEN-MIKROBATTERIEN UND IN DIESEM VERFAHREN HERGESTELLTE MIKROBATTERIEN

METHOD FOR THE PRODUCTION OF THIN-FILM LITHIUM-ION MICROBATTERIES AND RESULTING MICROBATTERIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.11.2011 FR 1159898**

(43) Date de publication de la demande:
**10.09.2014 Bulletin 2014/37**

(73) Titulaire: **I-TEN**
**69410 Champagne-au-Mont-d'Or (FR)**

(72) Inventeurs:
• **BOUYER, Frédéric**
  **F-21160 Perrigny Les Dijon (FR)**
• **VUILLEMIN, Bruno**
  **F-39230 Darbonnay (FR)**
• **GABEN, Fabien**
  **F-69130 Ecully (FR)**

(74) Mandataire: **Schmidt, Martin Peter**
  **IXAS Conseil**
  **15, rue Emile Zola**
  **69002 Lyon (FR)**

(56) Documents cités:
**EP-A1- 1 295 968    JP-A- 2002 042 790**
**JP-A- 2002 042 792**

• **FERRARI ET AL: "EPD of thick films for their application in lithium batteries", JOURNAL OF THE EUROPEAN CERAMIC SOCIETY, ELSEVIER SCIENCE PUBLISHERS, BARKING, ESSEX, GB, vol. 27, no. 13-15, 1 janvier 2007 (2007-01-01), pages 3823-3827, XP022143643, ISSN: 0955-2219, DOI: 10.1016/J.JEURCERAMSOC.2007.02.051**

**Description**

**Domaine de l'invention**

La présente invention appartient au domaine des batteries et notamment des micro-batteries. Elle concerne plus particulièrement les micro-batteries à ions de lithium entièrement solides, et un nouveau procédé de fabrication de telles micro-batteries en couches minces.

**État de la technique**

Récemment, l'utilisation des techniques de micro-fabrication a permis de réaliser des capteurs de tailles micrométriques. Ces capteurs sont utilisés en réseau afin de détecter et suivre des événements ou paramètres sur de larges espaces. L'alimentation de tous ces capteurs distribués en réseaux ne pouvant être réalisée par des connexions filaires, de nombreux développements visent à en réaliser des versions totalement autonomes. Ces capteurs sont équipés de sources de puissance et d'énergie embarquées, devant leur permettre de fonctionner pendant 10 à 20 ans.

Bien que ces micro-capteurs existent depuis de nombreuses années, les sources de micro-stockage de l'énergie restent toujours au stade de développement et des premiers prototypes commencent à apparaître sur le marché. Ces microbatteries sont associées dans les capteurs à des dispositifs de production d'énergie. En effet, les mini cellules photovoltaïques, générateurs thermoélectriques, piézoélectriques manquent de puissance, si bien qu'il est nécessaire de leur associer des micro-batteries qui assurent la fonction de réserve d'énergie et de puissance pour faire fonctionner le capteur.

La taille des micro-batteries doit être proche de celle des composants électroniques, aussi, les techniques conventionnelles de fabrication des batteries, comme par exemple celles utilisées pour faire des piles boutons, ne peuvent plus être utilisées. Ces techniques conventionnelles de fabrication ne permettent pas de faire de dispositifs de tailles sub-millimétriques, aussi, la diminution de volume, la miniaturisation des piles boutons, se traduisent par une diminution exponentielle de leur densité d'énergie.

Comme pour l'alimentation des capteurs autonomes, il existe de nombreuses autres applications pour lesquelles la réalisation de micro-batteries de très fines épaisseurs serait intéressante. Il s'agit principalement du développement des cartes à puces dites « intelligentes » et des étiquettes RFID.

De plus toutes les applications de « power back-up » qui jusqu'à présent utilisaient des piles boutons, peuvent avantageusement utiliser des micro-batteries rechargeables pour assurer cette fonction, réduisant ainsi la taille du dispositif de stockage d'énergie.

Différentes techniques de dépôt sous vide ont été utilisées pour la fabrication de microbatteries en couches minces. En particulier, le dépôt par PVD est la technologie la plus utilisée actuellement pour la fabrication de ces microbatteries en couches minces. L'absence d'électrolyte à base de solvant ou de polymères dans ces batteries leur confère la tenue en température exigée par les étapes d'assemblage par soudure à vague sur les cartes électroniques. Cette absence d'électrolyte organique impose de réaliser des films en couche mince exempts de porosité et d'autres défauts ponctuels pour garantir une faible résistivité électrique, et la bonne conduction ionique nécessaires au bon fonctionnement des dispositifs.

La réalisation de telles micro-batteries, dotées de films minces denses, sans porosité leur confère d'excellente densité d'énergie et de puissance qui restent néanmoins fonction de l'épaisseur des électrodes.

Cependant, les techniques de dépôt sous vide utilisées pour réaliser de tels films sont très couteuses et difficiles à mettre en oeuvre industriellement sur de larges surfaces, avec une productivité élevée.

Ces techniques nécessitent par ailleurs de travailler sur un substrat, souvent à base de silice, ce qui tend à diminuer la densité d'énergie, et de puissance de la batterie lorsqu'elle est de très faible dimension.

Par ailleurs, il est nécessaire d'utiliser des masques de dépôt couteux, et le rendement d'utilisation des matières première est faible. Les matériaux pulvérisés sous vide se trouvent également déposés sur les masques ainsi que sur les parois du réacteur.

Les autres technologies actuellement disponibles pour réaliser des couches minces, comprennent des modes de réalisation basés sur la densification de dépôts compacts de particules: Parmi ces techniques on peut citer la réalisation de dépôts par voie sol-gel. Cette technique consiste à déposer sur la surface d'un substrat un réseau polymérique obtenu après des étapes d'hydrolyse, polymérisation et condensation. La transition sol-gel apparait durant l'évaporation du solvant qui accélère les processus réactionnel en surface. Cette technique permet de réaliser des dépôts compacts de très faible épaisseur.

Les films ainsi obtenus ont une épaisseur de l'ordre de la centaine de nanomètres, ce qui est insuffisant pour permettre à la batterie de disposer de suffisamment d'autonomie.

Pour accroître l'épaisseur du dépôt sans induire de risques d'apparition de fissures ou craquelures, il convient de procéder par étapes successives. De ce fait, cette technique pose des problèmes de productivité industrielle, dès lors que l'on cherche à augmenter l'épaisseur du dépôt.

Les techniques d'encrage peuvent être mises en oeuvre pour obtenir des dépôts de quelques microns d'épais. Pour cela, il est nécessaire de disposer d'une encre fluide. La fluidité des encres dépend de la teneur en extraits secs, des tailles de particules, de la nature du solvant et d'éventuels composés organiques dissous dans cette encre. La viscosité des encres augmente lorsque la concentration en particules augmente, ou que pour un extrait sec donné, la taille des particules diminue. Par ailleurs, l'augmentation de la quantité de solvant conduit à accroître les risques de former des fissures, cavités et agglomérats dans le dépôt, pendant les phases de séchage. Les dépôts deviennent alors extrêmement difficiles à compacter. La compaction finale du dépôt est obtenue par évaporation du solvant contenu dans l'encre. Cette étape de séchage est difficile à maitriser car les régions de plus faibles densités, sécheront plus vite que les zones de plus fortes densités. Les effets capillaires induits par ces différences locales de niveau de séchage conduiront les zones de plus fortes densités, encore imprégnées, à se regrouper. Ceci conduit après séchage à la formation de cavité, d'agglomérats. L'élimination de ces défauts par compaction ne peut être effectuée qu'à l'aide de compaction sous de très fortes pressions (d'autant plus élevées que la taille des particules sera faibles) et/ou de frittage à des températures élevées, proches de la température de fusion du matériau constituant les particules.

Aussi, il est nécessaire de chauffer à des températures très élevées pour arriver à densifier la structure initialement poreuse. Les paliers de montée en température sont délicats à maitriser si l'on veut que le retreint liée au comblement de toutes ces porosités dans l'épaisseur du dépôt ne donne pas lieu à des fissures. De plus, tous les substrats ne supportent pas de telles températures, de surcroît les techniques actuelles de dépôt en phase liquide décrites ci-dessus ne permettent pas de maîtriser précisément l'épaisseur de dépôt.

Comme pour les technologies de dépôt sous vide, la réalisation de dépôts localisés, avec une bonne résolution spatiale, nécessite d'utiliser des masques de dépôt. Les encres sont alors enduites sur le substrat recouvert de ce masque (stencil) et les encres se trouvent aussi bien déposées sur le substrat que sur la surface du masque ayant servi à épargner localement le substrat.

Il existe enfin une dernière alternative pour le dépôt de matériaux en couches minces dans des dispositifs électrochimiques et en particulier les batteries. Il s'agit du dépôt de particules par électrophorèse. Par exemple, le brevet US 7,662,265 (Massachusetts Institute of Technology) décrit la fabrication de dispositifs électrochimiques en couches minces (entre autres des piles) par électrophorèse, dans lequel une des électrodes (anode ou cathode) et l'électrolyte solide sont obtenus simultanément, l'autre électrode étant formée préalablement au dépôt électrophorétique. De nombreux matériaux de cathode sont mentionnés, en particulier $LiCoO_2$, et $LiFePO_4$, les électrolytes solides mentionnés sont des électrolytes polymères.

Le brevet US 6,887,361 (University of California) décrit un procédé pour former un revêtement céramique sur un substrat de dispositif électrochimique à l'état solide. Le dépôt est réalisé par électrophorèse d'une suspension de particules de céramique dans de l'alcool isopropylique, suivi d'un séchage et d'un frittage. Le procédé est applicable essentiellement aux cellules à combustible à oxyde solide (SOFC).

Les demandes de brevet US 2007/184345, WO 2007/061928, US 2008/286651 et WO 2010/011569 (Infinite Power Solutions) décrivent des dispositifs électrochimiques comprenant une cathode déposée par des techniques autres qu'un dépôt sous vide ; elles décrivent notamment le dépôt d'une couche cathodique par électrophorèse à partir d'une poudre de taille micronique de $LiCoO_2$ ; cette couche comporte cependant des cavités, et elle doit être densifiée par un frittage à haute température. Les autres parties de la batterie sont obtenues par dépôt sous vide.

Le brevet US 7,790,967 (3G Solar Ltd) décrit le dépôt d'une électrode nanoporeuse en $TiO_2$ par électrophorèse à partir d'une suspension de nanoparticules de $TiO_2$ ; L'épaisseur de l'électrode est de l'ordre de 10 $\mu$m.

Certains documents décrivent l'utilisation de l'électrophorèse pour la réalisation de certaines parties de batteries en couches minces ; dans ces documents, l'électrophorèse conduit à des couches poreuses.

Le brevet JP 4501247 (DENSO) décrit un procédé de fabrication d'une électrode pour une batterie dans lequel une couche d'un matériau actif est formée par électrophorèse. Plus précisément, ce brevet décrit un procédé dans lequel un collecteur de charge est plongé dans une solution comprenant une matière active dans un solvant, ce procédé étant une partie d'un procédé plus général de fabrication d'une électrode pour batterie. L'électrophorèse de ladite matière active contenue dans la solution s'effectue en générant un gradient de potentiel électrique dans cette solution, la matière active formant une couche de matériau actif sur la surface du collecteur, et adhérant à ladite surface de collecteur. La fabrication de cathodes poreuses pour batteries Li-ion par ce procédé est mentionnée. Les techniques employées pour réaliser l'anode et l'électrolyte ne sont pas indiquées.

La demande de brevet JP 2002-042792 (DENSO) décrit un procédé de dépôt d'un électrolyte solide sur une électrode d'une batterie, le dépôt étant effectué par électrophorèse. Aucune densification n'est effectuée après le dépôt ; le dépôt est poreux. Les électrolytes visés sont essentiellement les électrolytes polymères, ainsi que le iodure de lithium.

**Objets de l'invention**

Un premier but de la présente invention est la fabrication de batteries en couches minces entièrement solides dont les couches possèdent une grande précision géométrique, notamment une épaisseur contrôlée avec précision, et un très faible nombre de défauts, par un procédé assurant une vitesse de dépôt élevée et présentant un coût d'investissement et d'exploitation peu élevé.

Un autre but de l'invention est de fabriquer des batteries en couches minces par un procédé facile à mettre en oeuvre industriellement et peu polluant.

Encore un autre but de l'invention est de disposer d'un procédé permettant de réaliser très simplement des couches minces de compositions chimiques variées.

Un autre but est de fabriquer des batteries présentant à la fois une meilleure densité de puissance et une meilleure densité d'énergie.

Encore un autre but est de fabriquer des batteries à durée de vie améliorée pouvant résister à des expositions en températures élevées sans se détériorer.

Encore un autre but est de fabriquer des batteries rechargeables. Encore un autre but est de fabriquer des batteries minces dont l'épaisseur ne dépasse pas quelques dizaines voire centaines de micromètres, et qui peuvent être intégrées sur des cartes électroniques, cartes à puce, étiquettes RFID et d'autres dispositifs de petite taille et/ou souples.

Ces objectifs sont atteints grâce à un procédé de fabrication de batteries en couches minces entièrement solides, lesdites batteries comprenant une couche de matériaux d'anode (« couche d'anode ») en contact électrique avec un collecteur anodique, une couche de matériaux d'électrolyte solide (« couche d'électrolyte ») et une couche de matériaux de cathode (« couche de cathode ») en contact électrique avec un collecteur cathodique, dans lequel procédé : une première couche d'électrode (cathode ou anode) est déposée par électrophorèse sur une zone conductrice d'un substrat, ledit substrat, ou ses éléments conducteurs, pouvant servir comme collecteur du de ladite électrode (courant cathodique ou anodique) de la batterie ; la couche d'électrolyte est déposée par électrophorèse sur ladite première couche d'électrode ; une seconde couche d'électrode (anode ou cathode) est déposée sur la couche d'électrolyte soit par électrophorèse ou par un autre procédé, tel qu'un procédé de dépôt sous vide.

Ledit procédé comprend en outre une étape dite de densification des couches déposées par électrophorèse ou bien plusieurs étapes dites de densification réalisées successivement après chaque dépôt de couches par électrophorèse. Ces étapes de densification ont pour effet d'augmenter la densité des couches déposées par électrophorèse. La (les) densification(s) peu(ven)t être effectuée(s) après le dépôt de la couche de cathode et/ou après le dépôt de la couche d'électrolyte, et/ou après le dépôt de la couche d'anode. On préfère qu'elle(s) soient effectuée(s) après le dépôt de la couche de cathode et/ou après le dépôt de la couche d'électrolyte, si la couche d'anode est déposée par une technique autre que l'électrophorèse, ou après le dépôt de la couche d'anode si la couche d'anode est déposée par électrophorèse.

Ladite densification peut se faire par un procédé mécanique, par exemple par un passage entre deux rouleaux, par pressage, de préférence isostatique, ou par choc, ou encore par un traitement thermique, ou bien par combinaison de ces procédés.

Dans un mode de réalisation, l'étape de densification thermique, et éventuellement aussi l'étape de densification mécanique, est réalisée sous vide ou sous gaz inerte.

La densification thermique peut être précédée ou accompagnée d'une ou plusieurs étapes de densification mécanique.

Dans un mode de réalisation avantageux, ladite une étape de densification est effectuée à une température $T_R$ qui, de préférence, ne dépasse pas 0,7 fois la température de fusion ou de décomposition (exprimée en °C), et de préférence ne dépasse par 0,5 fois (et encore plus préférentiellement ne dépasse pas 0,3 fois) la température de fusion ou de décomposition (exprimée en °C):

- du matériau déposé par électrophorèse, lorsque l'on cherche à densifier une seule couche
- du matériau le plus fusible co-déposé par électrophorèse, lorsque l'on cherche à densifier une couche contenant des particules de différentes compositions chimiques
- des matériaux de la couche la plus réfractaire lorsque plusieurs couches sont à densifier simultanément.

En tout état de cause, il est avantageux de ne pas dépasser 600°C, et on préfère de ne pas dépasser 500°C voire 400°C.

Plus particulièrement, le procédé de fabrication de batteries en couches minces entièrement solides selon l'invention comprend les étapes de :

(a) Approvisionnement d'une première suspension colloïdale « *SP+* » contenant des particules « *P+* » dite de « matériaux de cathode » ;

(b) Approvisionnement d'une deuxième suspension colloïdale « *SPn* » de particules « *Pn* » dite de « matériaux d'électrolyte solide »;

(c) Approvisionnement d'un substrat isolant revêtu totalement ou partiellement de surfaces conductrices;

(d) Immersion du substrat, pouvant être localement épargné par un masque isolant, dans un bain de ladite suspension *SP+* contenant des particules P+ de matériaux de cathode en présence d'une contre-électrode, suivi de l'application d'une tension électrique entre ledit substrat et ladite contre-électrode de manière à obtenir un dépôt électrophorétique contenant des particules *P+* de matériaux de cathode sur ledit substrat, pour obtenir un premier produit intermédiaire BP+ ;

(e) Immersion dudit premier produit intermédiaire BP+, pouvant être localement épargné par un masque isolant, dans un bain de ladite suspension *SPn* de particules Pn de matériaux d'électrolyte en présence d'une contre-électrode, suivi de l'application d'une tension électrique entre ledit substrat et ladite contre-électrode de manière à obtenir un dépôt électrophorétique de particules *Pn* de matériaux d'électrolyte sur la surface de la couche de cathode dudit produit intermédiaire BP+, obtenant ainsi un second produit intermédiaire BP+Pn;

(f) Dépôt d'une couche d'anode sur la couche d'électrolyte dudit second produit intermédiaire BP+Pn, pouvant être localement épargné par un masque, soit par dépôt sous vide ou par électrophorèse à partir d'une troisième suspension colloïdale « *SP-* » contenant des particules « *P-* » dite de « matériaux d'anode », pour obtenir un troisième produit intermédiaire BP+PnP-.

Sur la couche d'anode dudit troisième produit intermédiaire BP+PnP- on dépose ensuite une couche de collecteur de courant anodique pour terminer la micro-batterie.

Lorsqu'une anode en lithium ou alliage de lithium métallique est déposée comme anode, cette dernière peut également servir de collecteur de courant et assurer la connexion sur une terminaison préalablement déposée sur le substrat.

Avantageusement lesdites particules *P+* et/ou *P-* et/ou *Pn* sont des nanoparticules.

Le substrat peut être un isolant avec des zones métallisées. Ces métallisations pouvant servir de collecteurs de courant ou bien de terminaisons électriques.

Dans un mode de réalisation, le dépôt par électrophorèse est effectué de préférence avec une suspension colloïdale de particules de taille inférieure à 1 $\mu$m, de préférence inférieure à 100 nm, ou même inférieure à 30 nm. L'utilisation de nanoparticules, et de préférence de taille inférieure à 100 nm, de préférence inférieure à 30 nm, permet d'obtenir des couches minces présentant une grande densité après densification. Cette densité atteint avantageusement 85%, de manière préférée 90%, et de manière encore plus préférée 95% de la densité théorique du corps massif.

Avantageusement, la porosité d'au moins une des couches après densification est inférieure à 15%, préférentiellement inférieure à 10% et encore plus préférentiellement inférieure à 5%.

Dans le procédé selon l'invention, de préférence, la taille moyenne $D_{50}$ des nanoparticules de matériau d'anode, de cathode et/ou d'électrolyte solide est inférieure à 1 $\mu$m, de manière préférée inférieure à 100 nm, mains on préfère encore plus les nanoparticules de dimensions inférieures à 50 nm et le plus préférentiellement inférieures à 30 nm. Ceci permet de densifier les couches minces par voie thermique à une température plus basse. Dans ce but, on préfère des particules présentant une forme approximativement sphérique ou une forme de cube.

La taille de grain moyenne dans au moins une des couches d'anode, de cathode et/ou d'électrolyte après densification thermique est inférieure à 1 $\mu$m ; cela augmente la durée de vie de la batterie, probablement parce que le déséquilibre local de la batterie diminue. La durée du traitement thermique devrait être adaptée pour éviter le risque de croissance excessive (« parasitaire ») de certains grains.

Un autre but de l'invention est d'obtenir à l'issue du dépôt par électrophorèse, des couches de très forte compacité, exemptes notamment, de cavités, fissures et agglomérats, afin de faciliter la densification à basse température.

Dans certains modes de réalisation, le potentiel zêta des suspensions colloïdales approvisionnées SP+, SP- et/ou SPn aux étapes (a), (b) et (c) est supérieur à 40 mV, voire supérieur à 60 mV, afin d'avoir des suspensions stables ne contenant pas d'agglomérats de particules pouvant conduire à des défauts dans les couches déposées. Ces suspensions peuvent contenir un stabilisant stérique ou, de préférence, électrostatique.

Le dépôt électrophorétique des nanoparticules peut être facilité grâce à une étape de dépôt d'un composé destiné à abaisser le potentiel Zêta sur les bandes conductrices préalablement à l'étape de dépôt des particules P+, P- et ou Pn.

Un autre but de l'invention est le dépôt de films minces de compositions chimiques très variées, pouvant associer plusieurs phases et ce afin d'accroitre les fonctionnalités des dépôts. Ce but est atteint grâce à l'utilisation de la technique d'électrophorèse qui permet aisément de déposer des couches à partir de suspensions de mélanges de particules.

Un autre but de l'invention est de pouvoir contrôler très précisément les épaisseurs déposées (dans une gamme d'épaisseur pouvant aller de quelques centaines de nanomètres à quelques dizaines voire centaine de micromètre). Plus précisément, on souhaite disposer d'un procédé qui assure une parfaite homogénéité de l'épaisseur sur toute la surface du dépôt, ainsi qu'une excellente reproductivité et répétabilité à l'échelle industrielle.

Encore un autre but est d'économiser au mieux la matière première.

Ces objectifs sont atteints par l'utilisation de l'électrophorèse pour la préparation de la couche de cathode, de la couche d'électrolyte, et avantageusement aussi de la couche d'anode, et par le contrôle précis du courant de dépôt tout au long du dépôt par électrophorèse. Dans un mode de réalisation avantageux, l'épaisseur de la couche d'anode et/ou de cathode après densification est inférieure à 20 $\mu$m, préférentiellement inférieur à 10 $\mu$m, et encore plus préférentiellement inférieure à 5 $\mu$m.

Encore un autre but est de proposer une nouvelle micro-batterie en couches minces, facile à préparer sur un substrat rigide ou souple, de très grande fiabilité, de grande durée de vie et faible autodécharge, pouvant être rechargée et présentant de très grandes densités de stockage énergétique. Ce but est atteint par une micro-batterie en couches minces entièrement solides fabriquée par le procédé décrit ci-dessus, dans un quelconque de ses modes de réalisation et variantes, comprenant un empilement successif des couches suivantes : une couche d'électrode cathodique déposée sur un collecteur de courant cathodique, une couche d'électrolyte, une couche d'électrode anodique, qui sera reliée directement ou indirectement à un collecteur de courant anodique. De préférence, au moins une desdites couches d'électrode cathodique, d'électrolyte et d'électrolyte anodique, et de préférence toutes les trois, présentent une porosité inférieure à 20%, de préférence inférieure à 10% et encore plus préférentiellement inférieure à 5%.

**Description des figures**

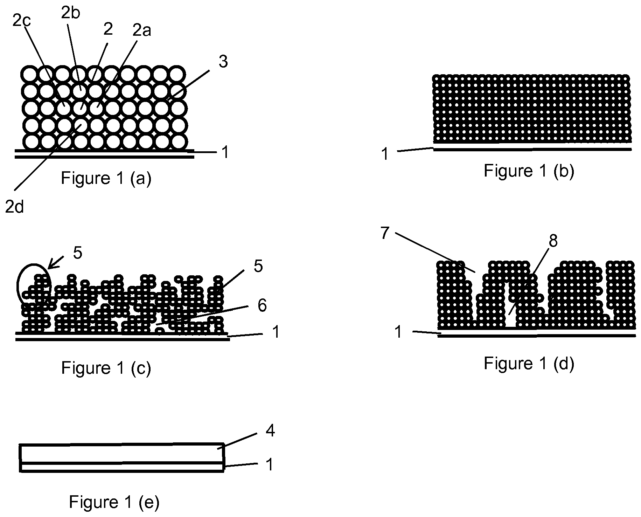

Les figures 1(a),(b),(c) et (d) montrent de manière schématique des couches formées par empilement de particules de forme approximativement isotrope. La figure 1(e) montre un film déposé par PVD sur un substrat.

La figure 1(a) montre de manière schématique un dépôt compact de particules **2** sur un substrat 1. Toutes les particules **2** sont en contact avec leurs premiers voisins **2a, 2b, 2c, 2d.** Les porosités **3** se situent entre les particules **2.**

La figure 1(b) montre de manière schématique un dépôt compact de particules **2** tel qu'il peut être obtenu en utilisant le procédé selon l'invention.

La figure 1(c) montre un dépôt de particules **2** sur un substrat, le dépôt présentant des défauts. Ces défauts sont essentiellement des cavités **6** liées à la présence d'agglomérats **5 ;** ces cavités **6** représentent donc une porosité inter-agglomérat, contrairement à la porosité intra-agglomérat **3** qui se situe à une échelle géométrique beaucoup plus fine. Dans le cas d'un dépôt par le procédé selon l'invention, ces agglomérats **5** se forment lorsque la suspension utilisée n'est pas suffisamment stable.

La figure 1(d) montre un dépôt de particules avec des fissures apparues après séchage ; ces fissures peuvent être des fissures ouvertes (débouchantes) **7** ou des fissures internes (non débouchantes) **8.**

La figure 1(e) illustre un dépôt dense **4** tel qu'il peut être obtenu par des techniques de type PVD ; la porosité de ces dépôts denses est proche de 0% car ils ne sont pas formées par empilement de particules.

Les figures 2 illustrent un mode de réalisation de l'invention. Les figures 2a, 2b, 2c, 2d montrent les produits obtenus à différentes étapes d'un autre mode de réalisation particulier du procédé selon l'invention, dans lequel le substrat sur lequel on dépose les électrodes est une plaque de substrat isolant comportant des zones métallisées. Dans ce mode de réalisation, l'anode est un film de lithium déposé sous vide qui sert également de collecteur de courant relié à une terminaison négative, préalablement déposée sur le substrat.

La figure 3 illustre le procédé de dépôt par électrophorèse à travers un masque isolant. Le diagramme de la figure 4 présente un mode de réalisation typique du procédé selon l'invention.

Les figures 5 représentent un autre mode de réalisation typique du procédé selon l'invention.

Les figures 6a, 6b, 6c, 6d représentent des chemins de diffusion du lithium dans différentes configurations d'assemblages de particules.

La figure 7a est une courbe de voltampérométrie pour une suspension de particules de LTO à 10 g/l d'extrait sec. La figure 7b est une courbe de voltampérométrie pour une suspension de particules de LTO à 2 g/l d'extrait sec, contenant quelques ppm d'acide citrique.

La figure 8 est un diagramme DLS montrant la distribution de la taille de particules d'électrolyte ($Li_{1,3}Al_{0,3}Ti_{1,7}(PO_4)_3$) en suspension.

Repères utilisés sur les figures :

| | |
|---|---|
| 1 | Substrat |
| 2,2a,2b,2c,2d | Particules |
| 3 | Pore |
| 4 | Film obtenu par dépôt PVD |
| 5 | Agglomérat |
| 6 | Cavité |
| 7 | Fissure débouchante |
| 8 | Fissure non débouchante |
| 13 | Collecteur d'anode |
| 20 | Substrat |
| 21 | Anode |
| 22 | Electrolyte |
| 23 | Couche métallique |
| 24 | Cathode |
| 25 | Fil de connexion |
| 26 | Collecteur cathodique |
| 27 | Surfaces métallisées |
| 28 | Terminaison électrique anodique |
| 30 | Particule chargée en surface |
| 31 | Nanoparticule en mouvement sous l'influence du champ électrique |
| 42 | Suspension colloïdale |
| 43 | Contre-électrode |
| 44 | Substrat |
| 45 | Surface métallique sur le substrat |
| 46 | Masque isolant |
| 47 | Source de tension |
| 63 | Couche de cathode |
| 65 | Substrat isolant |
| 66 | Couche d'électrolyte |
| 67 | Couche d'anode |
| 68a,68b | Films métalliques sur substrat isolant 65 |

(suite)

| 76 | Zone de contact surfacique entre les particules et l'électrolyte contenu dans les porosités (chemin de diffusion peu résistif) |
| --- | --- |
| 77 | Zone de contact ponctuel entre les particules (la diffusion du lithium étant limitée sur ce contact ponctuel) |
| 78 | Soudure des particules durant la densification ayant donné lieu à l'apparition de chemins de diffusion dans le solide, pour le transport des charges électriques (électrons et ions) |
| 79 | Phase plus fusible ayant consolidée les particules entre elles |

**Description détaillée de l'invention**

Dans le cadre de la présente invention, on entend par « dépôt électrophorétique » ou « dépôt par électrophorèse » une couche déposée par un procédé de dépôt de particules électriquement chargées en surface, préalablement mises en suspension dans un milieu liquide, sur un substrat conducteur, le déplacement des particules vers la surface du substrat étant généré par l'application d'un champ électrique entre deux électrodes placées dans la suspension, l'une des électrodes constituant le substrat conducteur sur lequel le dépôt est effectué, l'autre électrode (« contre-électrode ») étant posée dans la phase liquide. Un dépôt compact de particules se forme sur le substrat, si le potentiel zêta présente une valeur appropriée comme il sera expliqué ci-dessous.

Dans le cadre du présent document, la taille d'une particule est sa plus grande dimension. Ainsi, une « nanoparticule » est une particule dont au moins une de ses dimensions est inférieure à 100 nm. La « taille de particules » ou « taille moyenne de particules » d'une poudre ou d'un ensemble des particules est donnée en $D_{50}$.

Le « potentiel zêta » d'une suspension est défini comme la différence de potentiel existant entre le sein de la solution, et le plan de cisaillement de la particule. Il est représentatif de la stabilité d'une suspension. Le plan de cisaillement (ou rayon hydrodynamique) correspond à une sphère imaginaire autour de la particule dans laquelle le solvant bouge avec la particule lorsque les particules se déplacent dans la solution. La base théorique et la détermination du potentiel zêta sont connues de l'électrochimiste qui développe des dépôts par électrophorèse ; il peut être déduit de la mobilité électrophorétique. Pour la mesure directe du potentiel zêta, il existe différentes techniques et dispositifs commercialisés. Lorsque l'extrait sec est faible, on peut mesurer le potentiel zêta à l'aide d'un équipement de type Zetasizer Nano ZS de la société Malvern. Cet équipement mesure à l'aide de dispositifs optiques les vitesses de déplacement des particules en fonction du champ électrique qui leur est appliquée. Aussi, il faut que la solution soit très diluée pour permettre le passage de la lumière. Lorsque l'extrait sec est plus important, il est possible de mesurer le potentiel zêta à l'aide de techniques d'acoustophorèse, en utilisant par exemple un dispositif appelé « acoustosizer » de la société Colloidal Dynamics. La vitesse des particules est alors mesurée par des techniques acoustiques.

On entend par « dispersant » un composé apte à stabiliser la suspension colloïdale et notamment à éviter que les particules ne s'agglomèrent.

Le terme micro-batterie se réfère ici non pas à la taille totale du dispositif mais uniquement à son épaisseur. En effet, une micro-batterie à ion de lithium est toujours micrométrique, mais elle peut avoir une longueur et largeur beaucoup plus importantes, en fonction des besoins du dispositif qu'elle alimente, par exemple de plusieurs millimètres voire de plusieurs centimètres.

Le procédé selon l'invention comprend les étapes essentielles de dépôt électrophorétique de particules de matériaux de cathode, d'anode et d'électrolyte solide. Un tel procédé permet de réduire de manière significative la quantité de défauts dans les couches obtenues par rapport aux procédés connus, notamment les grandes porosités, cavités, craquelures et agglomérats ; la qualité des couches déposées est meilleure lorsque la suspension à partir de laquelle le dépôt est effectué est suffisamment stable.

Le procédé selon l'invention permet le dépôt de couches minces d'électrodes et/ou d'électrolyte. Ces couches ont une épaisseur généralement inférieure à environ 20 $\mu$m, de préférence inférieure à environ 10 $\mu$m, et encore plus préférentiellement inférieure à 5 $\mu$m.

Le procédé de fabrication de batteries en couches minces entièrement solides selon la présente invention présente une alternative avantageuse aux techniques connues, et particulièrement aux techniques de dépôt PVD, en permettant de faire des dépôts très denses, à basse température, sur de grandes surfaces de substrat, avec des vitesses de dépôt élevées, des épaisseurs contrôlables facilement et de manière très précise (en fonction de la taille des particules), sur un large intervalle d'épaisseur pouvant aller du dixième de micron à plusieurs dizaines voire centaines de microns, sans induire d'investissements très couteux dans des machines complexes et peu productives.

Les figures 1a à 1c illustrent les différences entre les porosités **3** intra agglomérats, situées entre les particules **2,** et que nous appellerons dans ce document « porosités », et les porosités **6** inter agglomérats, situées entre les agglomérats **5** et que nous appellerons « cavités » **6**.

Un dépôt compact est un dépôt qui ne comporte pas de cavités, ni de fissures. En revanche, il comporte des porosités dont le taux s'exprime en pourcentage et se calcule de la manière suivante :

Porosité [%] = [(densité du matériau massif – densité vraie)/densité vraie] x 100

sachant que la « densité vraie » est la densité mesurée sur la couche déposée et que la densité du matériau massif est la densité massive du matériau déposé, en faisant abstraction de la présence de particules dont l'empilement forme une porosité.

Nous décrivons ici en détail chacune des étapes du procédé selon l'invention.

*Préparation des suspensions*

De manière à avoir un dépôt parfaitement homogène en épaisseur, sans rugosité, et avec peu de défauts et le plus compact possible à l'issue du procédé de dépôt par électrophorèse, le dépôt est préférentiellement réalisé à partir de suspensions colloïdales *SP+, SP-, SPn* très stables. La stabilité des suspensions dépend de la taille des particules *P+, P-, Pn,* ainsi que de la nature du solvant utilisé et du stabilisant ayant servi à stabiliser la suspension colloïdale. L'approvisionnement de ces suspensions colloïdales correspond aux étapes (a), (b) et (c) d'un mode de réalisation principal du procédé selon l'invention.

On entend par « *SP+* » une suspension colloïdale contenant des particules « *P+* » de matériaux permettant d'obtenir un film de cathode, par « *SP-*« une suspension colloïdale contenant des particules « *P-*« de matériaux permettant d'obtenir un film d'anode, par « *SPn* » une suspension colloïdale de particules « *Pn* » de matériaux permettant d'obtenir un film d'électrolyte.

Afin de faciliter la densification ultérieure éventuelle du dépôt et garantir la possibilité de faire des dépôts en couches minces avec des épaisseurs et des profils (rugosité) très précis, des suspensions colloïdales contenant des particules de taille nanométriques sont préférées. Ces particules ont de préférence une taille de particules moyenne $D_{50}$ inférieure à 100 nm, et plus préférentiellement (surtout dans le cas où la suspension comporte des particules de matériaux à point de fusion élevés) inférieure à 30 nm. En effet, avec des particules de faibles dimensions, la densification du dépôt est grandement facilitée dès lors que le dépôt est compact. On peut également utiliser des particules ayant une forme parallélépipédique.

La réalisation de dépôts électrophorétiques à partir de suspensions colloïdales stables permet d'éviter la formation de pores, cavités et d'amas préjudiciables à la densification du dépôt. De plus, avec cette technique, il est possible d'obtenir des dépôts ayant une excellente compacité, sans nécessairement avoir obligatoirement recours à des pressages mécaniques, des déliantages, et ce, quelle que soit la taille des particules déposées.

Cette forte compacité du dépôt est obtenue bien que les suspensions soient très diluées, avec de faibles extraits secs.

La stabilité des suspensions peut être exprimée par leur potentiel zêta. Dans le cadre de la présente invention, la suspension est considérée comme stable lorsque son potentiel zêta est supérieur à 40 mV, et très stable lorsqu'il est supérieur à 60 mV. En revanche, lorsque le potentiel zêta est inférieur à 20 mV, des agglomérats de particules peuvent apparaitre. Aussi, pour garantir la bonne compacité du film mince, les dépôts sont de préférence réalisés à partir de suspensions colloïdales ayant un potentiel zêta supérieur à 40 mV, et encore plus préférentiellement 60 mV (en valeur absolue).

Les suspensions colloïdales destinées à être utilisées en électrophorèse comportent un solvant isolant électrique, qui peut être un solvant organique, ou de l'eau déminéralisée, ou un mélange de solvants, et des particules à déposer ; les suspensions colloïdales peuvent également comporter un ou plusieurs stabilisants.

Dans une suspension stable, les particules ne s'agglomèrent pas entre elles pour créer des amas susceptibles d'induire des cavités, agglomérats et/ou défauts importants dans le dépôt. Les particules restent isolées dans la suspension. Aussi, dans un mode de réalisation de la présente invention, la stabilité de la suspension nécessaire à l'obtention d'un dépôt compact est obtenue grâce à l'ajout de stabilisants.

Le stabilisant permet d'éviter la floculation des poudres et la formation d'agglomérats. Il peut agir par un effet électrostatique ou par un effet stérique. La stabilisation électrostatique est basée sur les interactions électrostatiques entre des charges et est obtenue par la distribution d'espèces chargées (ions) dans la solution. La stabilisation électrostatique est contrôlée par la concentration en ions ; elle peut par conséquent dépendre du pH. La stabilisation stérique met en oeuvre des polymères, tensio-actifs non ioniques voire des protéines, qui, ajoutés à la suspension, viennent s'absorber à la surface des particules pour causer la répulsion par encombrement de l'espace inter-particulaire. Une combinaison des deux mécanismes de stabilisation est également possible. Dans le cadre de la présente invention, on préfère la stabilisation électrostatique qui est facile à mettre en oeuvre, réversible, peu onéreuse, et qui facilite les processus ultérieurs de consolidation.

Cependant, les inventeurs ont remarqué qu'avec les nanoparticules des matériaux de batterie utilisées dans le cadre de la présente invention, il est possible d'obtenir des suspensions colloïdales de particules stables de particules non agglomérées entre elles et/ou d'agglomérats de quelques particules, sans ajouts de stabilisants. Les particules et/ou agglomérats ont de préférence une taille inférieure à 100 nm, et plus préférentiellement inférieure à 50 nm.

Ces suspensions ont été obtenues pour de faibles extraits secs, compris entre 2 g/L et 20 g/L, de préférence entre 3 et 10 g/L, et plus particulièrement pour des extraits secs de l'ordre de 4g/l, dans des solvants de type alcool et /ou étone. Ces suspensions colloïdales stables de particules monodisperses sans ajout de stabilisant sont particulièrement préférées dans le cadre de la présente invention.

Le potentiel Zêta de telles suspensions est généralement inférieur à 40 mV, et plus particulièrement compris entre 25 et 40 mV. Cela pourrait signifier que de telles suspensions tendent à être instables, cependant les inventeurs ont constaté que l'emploi de ces suspensions pour le dépôt électrophorétique conduisait à des films déposés très bonne qualité.

Dans ce type de suspensions, les nanoparticules sont chargées négativement, elles sont donc compatibles des dépôts en anaphorèse. L'ajout de stabilisants ou de cations dans la suspension pour modifier la charge de surface des nanoparticules afin de les rendre compatibles de polarisations cataphorétiques pourrait conduire à polluer les dépôts. Des stabilisants organiques, peu volatiles pourraient conduire à isoler électriquement les nanoparticules interdisant ainsi toute réponse électrochimique.

Lorsque l'eau est utilisée comme solvant, des tensions de dépôt inférieures à 5 V doivent être privilégiées. En effet, au-delà de 5 V l'eau risque de subir une électrolyse donnant lieu à des productions de gaz sur les électrodes qui rendent les dépôts poreux et diminuent leur adhérence sur le substrat. Par ailleurs, les réactions galvaniques en milieu aqueux donnent lieu à la formation de cations métalliques susceptibles de polluer les dépôts.

Dans un mode de réalisation préféré, les dépôts se font en phase solvantée. Il est ainsi possible de travailler à des valeurs de tension plus élevées, augmentant ainsi les vitesses de dépôts.

Selon l'invention, les nanoparticules utilisées pour la réalisation du film mince de <u>cathode</u> sont choisies de manière préférée, parmi un ou plusieurs des matériaux suivants :

(i) les oxydes $LiMn_2O_4$, $LiCoO_2$, $LiNiO_2$, $LiMn_{1,5}Ni_{0,5}O_4$, $LiMn_{1,5}Ni_{0,5-x}X_xO_4$ (où x est sélectionné parmi Al, Fe, Cr, Co, Rh, Nd, autres terres rares, et où $0 < x < 0,1$), $LiFeO_2$, $LiMn_{1/3}Ni_{1/3}Co_{1/3}O_4$;
(ii) les phosphates $LiFePO_4$, $LiMnPO_4$, $LiCoPO_4$, $LiNiPO_4$, $Li_3V_2(PO_4)_3$ ;
(iii) toutes les formes lithiées des chalcogénides suivants : $V_2O_5$, $V_3O_8$, $TiS_2$, $TiO_yS_z$, $WO_yS_z$, $CuS$, $CuS_2$.

Selon l'invention, les nanoparticules utilisées pour la réalisation du film mince de <u>anode</u> par électrophorèse sont choisies de manière préférée, parmi un ou plusieurs des matériaux suivants :

(i) les oxynitrures d'étain (de formule typique $SnO_xN_y$) ;
(ii) les oxynitrures mixtes de silicium et étain (de formule typique $Si_aSn_bO_yN_z$ avec a>0, b>0, a+b≤2, 0<y≤4, 0<z≤3) (appelés aussi SiTON), et en particulier le $SiSn_{0,87}O_{1,2}N_{1,72}$ ; ainsi que les oxynitrures sous la forme $Si_aSn_bC_cO_yN_z$ avec a>0, b>0, a+b≤2, 0<c-10, 0<y<24, 0<z<17; $Si_aSn_bC_cOyN_zX_n$ et $Si_aSn_bOyN_zX_n$ avec Xn au moins un des éléments parmi F, Cl, Br, I, S, Se, Te, P, As, Sb, Bi, Ge, Pb.
(iii) les nitrures de type $Si_xN_y$ (en particulier avec x=3 et y=4), $Sn_xN_y$ (en particulier avec x=3 et y=4), $Zn_xN_y$ (en particulier avec x=3 et y=4), $Li_{3-x}M_xN$ (avec M = Co, Ni, Cu) ;
(iv) les oxydes $SnO_2$, $Li_4Ti_5O_{12}$, $SnB_{0,6}P_{0,4}O_{2,9}$.

Pour la réalisation de l'anode ou de la cathode, on peut ajouter aux matériaux cités précédemment des nanoparticules de matériaux conducteurs électroniques, et en particulier de graphite, et/ou des nanoparticules de matériaux conducteurs des ions lithium, du type de ceux utilisés pour réaliser les films d'électrolyte. En effet, certains matériaux d'électrode sont de mauvais conducteurs ioniques et électriques, par conséquent lorsque les épaisseurs déposées sont supérieures à 0,5 $\mu$m l'électrode peut être trop résistive, et elle ne fonctionne plus. Or des épaisseurs de 1 à 10 $\mu$m sont généralement souhaitables pour les électrodes, afin d'avoir des batteries avec de bonnes densités d'énergie. Dans ce cas il est nécessaire de réaliser un co-dépôt de particules de matériaux d'électrode et de particules conductrices (ioniques et/ou électriques).

Si la couche d'anode est déposée par un procédé autre que l'électrophorèse, elle est préférentiellement réalisée par dépôt sous vide, et le matériau déposé est de préférence du lithium ou un alliage de lithium.

L'électrolyte doit être un bon conducteur ionique mais un isolant électrique. Selon l'invention, les nanoparticules utilisées pour la réalisation du film mince de l'<u>électrolyte</u> sont choisies de manière préférée, parmi un ou plusieurs des matériaux suivants :

(i) les composés lithiés à base d'oxynitrure de lithium et de phosphore (appelés LiPON) sous forme $Li_xPO_yN_z$ avec $x \sim 2,8$ et $2y+3z \sim 7,8$ et $0,16 \leq z \leq 0,4$, et en particulier le $Li_{2,9}PO_{3,3}N_{0,46}$, mais également toutes les variantes sous forme $Li_wPO_xN_yS_z$ avec $2x+3y+2z = 5=w$ et $3,2 \leq x \leq 3,8$, $0,13 \leq y \leq 0,4$, $0 \leq z \leq 0,2$, $2,9 \leq w \leq 3,3$ ou sous forme $Li_tP_xAl_yO_uN_vS_w$ avec $5x+3y=5$, $2u+3v+2w=5+t$, $2,9 \leq t \leq 3,3$, $0,94 \leq x \leq 0,84$, $0,094 \leq y \leq 0,26$, $3,2 \leq u \leq 3,8$, $0,133 \leq v \leq 0,46$, $0 \leq w \leq 0,2$ ;

(ii) les composés lithiés à base d'oxynitrure de lithium, de phosphore et de silicium (appelés LiSiPON), et en particulier le $Li_{1,9}Si_{0,28}P_{1,0}O_{1,1}N_{1,0}$ ;

(iii) les oxynitrures de lithium de types LiBON, LiBSO, LiSiPON, LiSON, thio-LiSiCON, LiPONB (ou B, P et S représentent respectivement le bore, le phosphore et le soufre);

(iv) les composés $La_{0,51}Li_{0,34}Ti_{2,94}$, $Li_{3,4}V_{0,4}Ge_{0,6}O_4$, $Li_2O-Nb_2O_5$, $LiAlGaSPO_4$ ; les formulations à base de $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (où M = Ge, Ti, et/ou Hf, et où $0 < x < 1$), $Li_{1+x+y}Al_xTi_{2-x}Si_yP_{3-y}O_{12}$ (où $0 \leq x \leq 1$ et $0 \leq y \leq 1$), $Li_{1+x+z}M_x(Ge_{1-y}Ti_y)_{2-x}Si_zP_{3-z}O_{12}$ (où $0 \leq x \leq 0,8$; $0 \leq y \leq 1,0$ ; $0 \leq z \leq 0,6$), et en particulier les formulations $4,9LiI-34,1Li_2O-61B_2O_3$, $0,30Li_2S-0,26B_2S_3-0,44LiI$, $60Li_2S-40SiS_2$, $0,02Li_3PO_4-0,98(Li_2S-SiS_2)$, $2(Li_{1,4}Ti_2Si_{0,4}P_{2,6}O_{12})-AlPO_4$, $0,7Li_2S-0,3P_2S_5$.

Une fois la composition chimique cible souhaitée définie, i.e. nature de la poudre ou des mélanges de poudres, les nanoparticules sont mises en solution dans une phase liquide appropriée. Dans certains modes de réalisation, on ajoute un stabilisant afin d'obtenir une suspension dont le potentiel zêta est de préférence supérieur à 40 mV, et plus préférentiellement supérieur à 60 mV.

Cependant, de manière avantageuse, on utilise des suspensions ne contenant pas de stabilisants, et en particulier des suspensions ayant de faibles extraits secs (généralement inférieur à 10g/L), et en particulier des suspensions contenant des particules de taille inférieure à 100 nm, et de préférence inférieure à 50 nm. Dans ce cas le potentiel Zêta de la suspension est généralement compris entre 25 et 40 mV.

A titre d'exemple les solvants utilisés peuvent être à base de cétone, d'alcool ou d'un mélange des deux.

Parmi les stabilisants stériques susceptibles d'être utilisés, on peut citer notamment le polyéthylène imine (PEI), l'acide polyacrylique (PAA), l'acide citrique, la nitrocellulose sous réserve qu'ils soient solubles dans la solvant organique choisi.

Des stabilisations électrostatiques peuvent être réalisées par ajout d'iodure, par ajouts d'acides ou bases. L'acidification ou basification de la solution peut être réalisée par ajout de traces d'eau et d'acides lorsque la suspension est réalisée en phase solvantée.

La conductivité électrique de la suspension peut être contrôlée pour obtenir un gradient de potentiel important entre les deux électrodes, sans risque de claquage diélectrique. De préférence la conductivité de la suspension colloïdale est comprise entre 1 et 20 $\mu$S/cm. Des acides et bases fortes peuvent être ajoutés en faible quantité pour contrôler la conductivité de la suspension et charger les surfaces des particules.

Pour obtenir une suspension stable, avec des particules de tailles nanométriques sans agglomérats, il peut être nécessaire de réaliser une étape de broyage et/ou de dispersion des poudres, préalablement à la mise en suspension des nanoparticules, afin de désagglomérer les particules et éventuellement d'ajuster leur taille (pour obtenir une taille moyenne inférieure à 100 nm ou même inférieure à 30 nm) et de réduire la dispersion de taille. Des ultrasons peuvent également être mis en oeuvre pour aider à la désagglomération et à la mise en suspension des particules.

Les défauts créés dans les particules pendant les étapes de broyage dispersion, sont également susceptibles de diminuer la température de densification, au même titre que la réalisation de compressions mécaniques.

_Dépôt des couches par électrophorèse_

Selon l'invention, au moins la couche de cathode et la couche d'électrolyte sont déposées par voie électrophorétique. Le dépôt électrophorétique de particules se fait par l'application d'un champ électrique entre le substrat sur lequel est réalisé le dépôt et une contre-électrode, permettant de mettre les particules chargées de la suspension colloïdale en mouvement, et de les déposer sur le substrat. L'absence de liants et d'autres solvants déposés en surface avec les particules permet d'obtenir des dépôts très compacts. La compacité obtenue grâce au dépôt électrophorétique, et l'absence de composés organiques en grande quantité dans le dépôt permet de limiter voire d'éviter les risques de craquelures ou d'apparition d'autres défauts dans le dépôt pendant les étapes de séchage.

D'autre part, du fait que le dépôt obtenu par électrophorèse ne contient pas de liants, ou d'autres composés organiques, le procédé selon la présente invention ne nécessite pas d'étapes de brulage, ou d'évaporation de composés corrosifs ou nocifs. Or, l'accroissement des contraintes économiques et environnementales impose de réduire les rejets dans l'atmosphère, ainsi la présente invention répond bien à ces contraintes.

Par ailleurs, le brulage de ces composés organiques tend à créer des zones vides, des cavités dans le dépôt qui seront par la suite difficiles à combler. Ces étapes de déliantage peuvent également conduire à polluer les surfaces des particules déposées.

De plus la vitesse de dépôt peut être très élevée en fonction du champ électrique appliqué et de la mobilité électrophorétique des particules de la suspension. Pour une tension appliquée de 200 V, des vitesses de dépôt de l'ordre de 10 $\mu$m/min peuvent être obtenues.

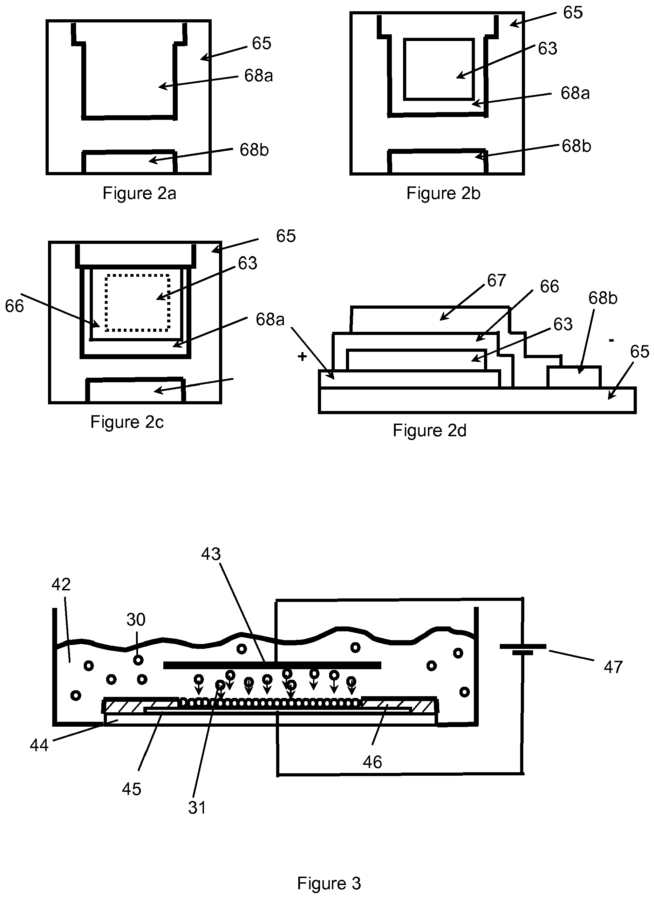

La figure 3 illustre le principe de fonctionnement des dépôts par électrophorèse.

L'inventeur a constaté que cette technique permet de réaliser des dépôts sur de très larges surfaces avec une excellente homogénéité et une très grande précision (sous réserve que les concentrations en particules et champs électriques soient homogènes sur la surface du substrat). Cette technique permet également de recouvrir des surfaces tridimensionnelles.

L'épaisseur de chacune des couches de cathode, anode et électrolyte solide est de préférence comprise entre 1 $\mu$m et 10 $\mu$m.

Après le dépôt de la couche et avant l'éventuelle étape de frittage par traitement thermique, on peut effectuer une étape de densification mécanique (par exemple par pressage) afin de compacter davantage les particules et induire des déformations des particules qui faciliteront encore plus la densification ultérieure.

Le dépôt par électrophorèse peut être mis en oeuvre dans un procédé de type « batch » (statique) ou dans un procédé continu.

Lors du dépôt électrophorétique, une alimentation stabilisée permet d'appliquer une tension entre le substrat conducteur et une contre électrode située dans la suspension colloïdale. Cette tension peut être continue ou alternative. Un suivi précis des courants obtenus permet de suivre et de contrôler précisément les épaisseurs déposées. Lorsque les couches déposées sont isolantes, en fonction de leur épaisseur, elles peuvent affecter la valeur du champ électrique, aussi, dans ce cas, on privilégie un mode de dépôt en courant contrôlé. En fonction de la résistivité de l'interface, la valeur du champ électrique est modifiée.

Par ailleurs cette technique de dépôts permet un recouvrement parfait de la surface quelle que soit sa géométrie, la présence de défauts d'aspérité. Elle permet par conséquent de garantir les propriétés diélectriques du film d'électrolyte.

Lorsque des matériaux peu ou pas conducteurs électriques sont déposés sur la surface d'un substrat, les éventuelles zones moins bien revêtues, sont plus conductrices et concentrent ainsi localement une vitesse de dépôt plus importante qui tend à compenser voir effacer le défaut. Les dépôts obtenus sont ainsi intrinsèquement d'excellente qualité, avec peu de défauts et très homogènes.

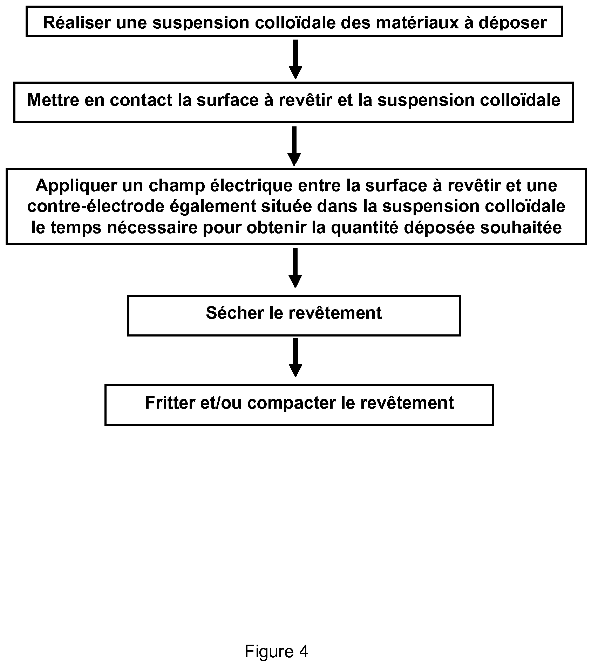

Le diagramme de la figure 4 présente un mode de réalisation typique du procédé selon l'invention, représenté ici pour chacune des couches :

1° étape: Préparation des suspensions. On utilise des poudres de la composition chimique du revêtement (de la couche mince) que l'on souhaite déposer.

2° étape : Immersion du substrat dans la suspension colloïdale. La suspension colloïdale peut recouvrir la totalité de la surface du substrat. Dans un mode de réalisation particulier, un masque peut être appliqué sur la surface du substrat de manière à limiter la surface en contact de la suspension et par voie de conséquence réduire la surface de dépôt.

3° étape : Application d'un champ électrique entre le substrat et une contre-électrode située dans la suspension colloïdale. Ce champ électrique peut être constant et / ou variable (alternatif). Le sens moyen du champ électrique, c'est-à-dire du potentiel appliqué aux électrodes est adapté à la charge de la particule à déposer (cataphorèse ou anaphorèse).

4° étape : Séchage. Les conditions de séchage dépendent de l'épaisseur déposée ainsi que de la nature du solvant. Il est possible d'effectuer une étape de densification mécanique sur la couche humide avant séchage, par exemple par calandrage ou compression statique ; cela peut permettre d'améliorer la qualité de la couche, mais ne remplace pas la densification à sec.

5° étape : Densification. La densification est réalisée par densification mécanique et/ou traitement thermique. La densification peut être réalisée après le dépôt de chaque nouvelle couche ou sur plusieurs couches à la fois.

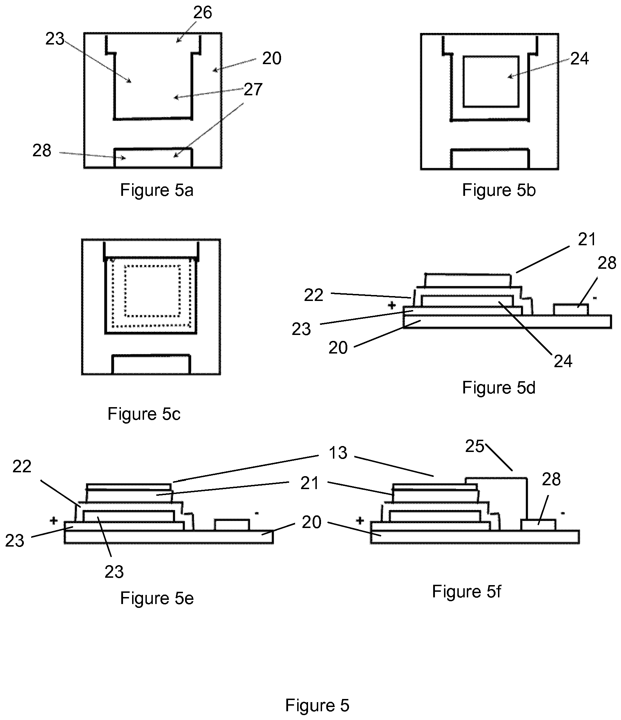

La figure 5 représente un autre mode de réalisation du procédé selon l'invention.

*Densification du dépôt*

Avantageusement, les couches déposées sont densifiées, afin de réduire la taux de porosité du revêtement. Cette étape de densification du dépôt peut être réalisée :

- par un moyen mécanique, en particulier par compression isostatique. La pression appliquée est dans certains modes de réalisation supérieure à 250 MPa voire supérieure à 400 MPa. Cependant, avantageusement, la pression appliquée est comprise entre 30 et 100 MPa, et de préférence entre 40 et 60 MPa.

- par un traitement thermique. La température dépend fortement de la composition chimique des poudres déposées. Selon la nature des matériaux déposés, il peut être utile par ailleurs de maintenir une atmosphère contrôlée afin d'éviter l'oxydation du revêtement ;

- par une combinaison de moyens thermiques et mécaniques, en particulier par frittage sous pression ;

Le substrat est composé d'un matériau isolant avec des zones métallisées, conductrices et généralement métallique. On préfère éviter de le chauffer à des températures élevées lors de la fabrication de la batterie, afin d'éviter tout risque d'oxydation et de détérioration des propriétés de surfaces. La réduction de l'oxydation de surface est particulièrement bénéfique pour diminuer des résistances de contact électrique, point essentiel au fonctionnement de dispositifs de stockage et/ou production d'énergie.

L'obtention de couches électrophorétiques de très bonne qualité tel que décrit ci-dessus, et en particulier de couches compactes, permet de réduire la durée et la température des traitements thermiques et de limiter le retreint de ces traitements, et d'obtenir une structure nanocristalline homogène. Ceci contribue à l'obtention de couches denses sans défauts.

L'inventeur a constaté que plus la taille des particules déposées diminue, plus la température du traitement thermique peut être diminuée. Il est ainsi possible de réaliser des dépôts en couches minces, ou relativement épaisses, avec des taux de porosité inférieure à 10%, de préférence inférieure à 5% voire 2%, sans avoir recours à des températures et/ou durées de traitement thermiques importants. Par ailleurs, cette technologie de compaction des dépôts à faible température réduit considérablement les risques de rétreint. Aussi, il n'est plus nécessaire d'avoir recours à des cycles de traitement thermique très complexes et couteux pour consolider les dépôts d'électrodes et d'électrolyte des batteries.

Durant la phase de densification mécanique et/ou thermique il peut être avantageux de travailler sous vide, ou sous atmosphère inerte afin d'éviter l'apparition de pollution sur les surfaces des particules qui pourraient nuire au mécanisme de densification des particules entre-elles.

Pour des tailles de particules telles que celles utilisées dans le procédé selon l'invention, c'est l'augmentation des énergies de surface qui devient la principale force motrice de la densification par traitement thermique; cela se traduit par une forte baisse des températures de densification lorsque la taille des particules diminue. Cependant, pour que cette réduction des températures de consolidation soit effective, il est nécessaire que les particules soient au préalable compactées mécaniquement, et/ou déposées avec un empilement compact. C'est la multiplication des contacts mécaniques entre ces particules qui permet de faciliter les processus diffusionnels à l'origine de la densification. Aussi, pour compacter les dépôts, des pressages sont généralement appliqués.

La présence d'agglomérats, de cavités inter-agglomérats influence également la densification. Plus leurs tailles augmentent, plus la distance de diffusion augmente et plus la température de densification est élevée pour obtenir une bonne densification.

Ainsi, avec des nanoparticules déposées par électrophorèse on peut s'approcher de la densité théorique géométrique d'un empilement compact de sphères (74%) sans étape de compaction mécanique.

Un tel résultat n'est pas possible par les techniques d'encrage. Le dépôt de nanoparticules par la technique des encres mentionnée ci-dessus est très difficile en couche mince car la diminution de la taille des particules conduit à l'augmentation de la viscosité des suspensions. Il faut alors diminuer l'extrait sec en augmentant la proportion de solvant ; on observe alors que l'élimination d'une grande quantité de solvant des couches crues induit des pores et cavités, qu'il sera quasiment impossible de colmater sans avoir recours à des températures et/ou pressions extrêmes.

La forte compacité du dépôt obtenu par électrophorèse, et la faible quantité de solvant à évaporer limite très sensiblement le risque d'apparition de fissures après séchage. Par ailleurs, la faible taille des particules, leur grande surface spécifique tend à faciliter les étapes de consolidation par un traitement thermique (appelé parfois dans ce contexte : « frittage »). La densification du dépôt peut ainsi être réalisée à des températures proches de 0,7 Tf voire, 0,5$T_f$, ou 0,3$T_f$ où $T_f$ est la température de fusion (exprimée en °C) du matériau massif de composition chimique identique à celle de la particule déposée. Le terme « température de fusion » englobe ici la température de décomposition pour le cas des substances qui n'ont pas de point de fusion.

Lorsque la couche est composée d'un mélange de matériaux, la température de traitement thermique st choisie par rapport à la température de fusion du matériau le plus fusible, c'est à dire ayant la température de fusion la plus basse. Pour réduire encore cette température de densification, il est également possible d'appliquer une compression mécanique à ce dépôt afin d'accroitre davantage sa compacité, et/ou créer des défauts ponctuels qui vont contribuer à accélérer le processus de densification, d'obtention de couches minces sans porosités.

Un tel procédé de fabrication de couches minces peut être utilisé directement sur des substrats comme des polymères métallisés, des feuillards en aluminium, ayant de faibles températures de fusion.

Les nanoparticules étant très sensibles aux pollutions de surfaces, il est cependant préférable de réaliser ces traitements de consolidation sous vide, ou bien sous atmosphère inerte.

La figure 2a représente l'approvisionnement d'un substrat, ici sous forme d'une plaque isolante **65** revêtue partiellement de films métalliques **68a, 68b** correspondant à un mode de réalisation principal de l'invention. La figure 2b représente le dépôt par électrophorèse des nanoparticules de cathode **63** sur la partie métallique du substrat **68a.** La figure 2c représente le dépôt par électrophorèse des nanoparticules d'électrolyte **66** sur la partie métallique du substrat **68a** recouverte de cathode **63.**

La figure 2d représente une vue en coupe de la batterie après dépôt du film mince d'anode.

Dans cet exemple, l'anode est obtenue par évaporation d'un film de lithium métallique qui sert à la fois d'anode mais également à assurer le contact électrique avec le collecteur de courant anodique déposé sur le substrat.

La figure 3 représente la vue en coupe du procédé de dépôt par électrophorèse des nanoparticules **30** de matériau cathodique contenues dans une suspension colloïdale **42** autour d'un masque isolant **46** sur un substrat **44** présentant une surface métallisée **45.** Les particules chargées **31** se déposent sous l'influence d'un champ électrique généré par la source de tension **47** sur la surface métallisée **45** du substrat **44.** Cette figure illustre le principe de fonctionnement des dépôts par électrophorèse, et correspond également à la réalisation de la figure 2b.

La figure 5 représente, étape par étape, un autre exemple, de réalisation, dérivé de celui de la figure 2, mais dans lequel la couche anodique **21** n'est pas métallique, mais par exemple en $Li_4Ti_5O_{12}$. Un fil de connexion **25** établit la liaison électrique entre le collecteur anodique **13,** typiquement une couche de métal déposée sur la couche anodique **21,** et un dépôt métallique **28** servant de terminaison électrique sur lequel le courant peut être dérivé (par exemple par contact mécanique ou par soudure avec un élément métallique) vers le composant consommateur, le deuxième contact pouvant être relié à la couche métallique **23** agissant comme collecteur de courant cathodique.

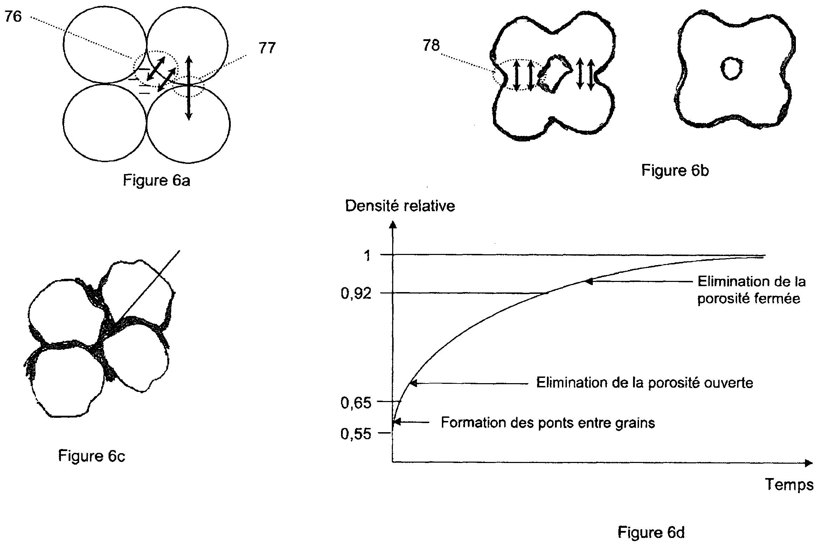

La figure 6a représente le chemin de diffusion du lithium dans un empilement compact de particules imprégné d'électrolyte. Il existe une zone de contact surfacique **76** entre les particules et l'électrolyte contenu dans les porosités. Le chemin de diffusion peu résistif. Il existe également une zone de contact ponctuel **77** entre les particules. La diffusion du lithium sur ce contact ponctuel est limitée.

La figure 6b représente l'évolution de l'interface entre les particules pendant la consolidation. Le chemin de diffusion **78** peut être assuré en phase solide, sans recours à un électrolyte liquide dans les porosités

La figure 6c représente la structure obtenue après densification d'un dépôt composite contenant une phase «fusible» **79.**

La figure 6d montre de manière schématique l'influence de la densification sur le type de porosité. Ce point peut justifier que nos batteries aient des porosités inférieures à 30%. A ce niveau, elles sont fermées et ne peuvent plus être imprégnées d'électrolyte.

Plus la porosité est faible meilleures seront les performances (Wh/l, Wh/kg) si la batterie est en couches minces.

L'électrophorèse permet de déposer des couches de compositions difficiles voire impossibles à obtenir par voie sous vide ; par exemple, on peut incorporer des polymères dans une phase minérale, ou déposer des composés de type spinelle ($LiMn_2O_4$), olivine ($LiFePO_4$) difficilement accessibles par dépôt sous vide.

Il convient de noter que si l'on effectue la densification de la cathode ou de l'électrolyte avant le dépôt électrophorétique de la couche suivante (en l'occurrence : électrolyte ou anode), il y a un risque que le lithium migre vers la surface sur laquelle s'effectue le dépôt électrophorétique : le potentiel appliqué notamment à la couche d'électrolyte pour déposer par voie électrophorétique la couche d'anode est très supérieur au potentiel de charge de la batterie formée, ce qui risque de détruire la batterie formée.

Il convient par conséquent d'adapter la charge de surface des particules à déposer ainsi que le sens du champ électrique afin d'éviter toute migration des ions lithium des couches minces déposées.

Les microbatteries susceptibles d'être obtenues par le procédé selon l'invention se distinguent des batteries connues par plusieurs particularités structurelles. L'électrolyte est entièrement solide. Les couches peuvent présenter une composition qui ne peut pas être obtenue par dépôt sous vide. Le taux de porosité des couches d'anode, de cathode et d'électrolyte solide, exprimé par le rapport entre la densité réelle et la densité théorique des couches est élevé et peut atteindre 0,9 voire 0,95. La taille des grains peut être beaucoup plus faible que dans les batteries à couches minces déposées par des encres, car la couche déposée par électrophorèse est plus compacte et peu être densifiée à basse température.

Avantageusement, dans les batteries selon l'invention, tous les collecteurs sont en aluminium, qui est moins coûteux que le cuivre ou l'argent ; il est aussi plus léger. Dans les batteries selon l'état de la technique, l'utilisation de l'aluminium n'est souvent pas possible ou limité à la cathode, soit parce que leur fabrication implique des températures trop élevées par rapport au point de fusion de l'aluminium soit parce qu'une anode en aluminium risquerait d'être attaquée par les sels de lithium qui s'y déposent. Le fait de n'employer au sein d'une même batterie qu'un seul matériau pour les collecteurs facilite leur recyclage. Avantageusement, les collecteurs sont des feuillards ou feuilles en aluminium ; ces feuillards ou feuilles peuvent avoir été traités par électro-polissage afin de diminuer leur épaisseur et lisser leur surface.

Ils peuvent être nickelés pour éviter la formation d'une couche d'oxyde résistive sur la surface de l'aluminium.

Une autre caractéristique structurelle des batteries selon l'invention est que la couche d'électrolyte recouvre, au moins sur un côté, la tranche des couches d'anodes et de cathode.

Une dernière caractéristique structurelle des batteries selon l'invention est leur stabilité dimensionnelle pendant leur utilisation : dans certains matériaux d'anode (notamment comme le $Li_4Ti_5O_{12}$), qui sont difficilement accessibles par dépôt sous vide, l'insertion du lithium ne conduit pas à une variation de l'épaisseur. Cela améliore la durée de vie de batteries, surtout de celles fabriquées par empilement de plusieurs structures « collecteur / anode / électrolyte / cathode / collecteur ».

L'invention présente de nombreux avantages. Le procédé de fabrication des couches d'anode, d'électrolyte solide et de cathode par électrophorèse est simple, rapide, peu onéreux. Le procédé n'a pas besoin d'être mis en oeuvre dans une atmosphère sèche, contrairement aux procédés selon l'état de la technique mettant en oeuvre des sels de lithium ou de lithium métallique, très sensibles à l'humidité. Les batteries obtenues présentent une forte densité de puissance ; elles présentent également une forte densité d'énergie (environ deux fois plus que les batteries à ions de lithium connues) dû au très faible taux de porosité, et à la faible épaisseur des films d'électrolyte. L'absence de sels de lithium corrosifs dans les électrolytes, ainsi que la possibilité de substituer les anodes à base de lithium métallique par des matériaux à insertion améliore la durée de vie de la batterie, diminue le risque de court-circuit interne et améliore également sa résistance à la température ; de ce fait, les batteries selon l'invention peuvent subir une opération de soudage à la vague. Ainsi, les batteries selon l'invention présentent un meilleur niveau de sécurité. Par ailleurs, leur taux d'autodécharge est plus faible, car la couche d'électrolyte ne présente pas de défauts, de porosités et recouvre les bords des électrodes.

Le procédé selon l'invention peut être mis en oeuvre de la manière suivante. Les exemples qui suivent sont donnés à titre d'illustration, sans limiter la portée de l'invention.

Exemple 1 - fabrication d'une batterie

1- Préparation de la suspension colloïdale SP+

Pour obtenir la suspension SP+ de particules P+ de matériau de cathode, on synthétise une poudre de $LiMn_2O_4$ constituée d'amas de nanoparticules. Pour cela on utilise la méthode de Pechini décrite dans l'article « Synthesis and Electrochemical Studies of Spinel Phase LiMn2O4 Cathode Materials Prepared by the Pechini Process », W. Liu, G.C. Farrington, F. Chaput, B. Dunn, J. Electrochem. Soc., vol.143, No.3, 1996.. Après l'étape de calcination à 600°C, la poudre contient des amas dont la taille est comprise entre 50 nm et 100 nm.

Cette poudre est ensuite mise en suspension dans de l'éthanol avec un extrait sec de $LiMn_2O_4$ égal à 20 g/l.

La suspension SP+ est introduite dans le bol d'un broyeur à billes préalablement rempli de billes en céramiques de diamètre 0,1 mm. Le broyage pendant 2 heures en présence de quelques centaines de ppm d'agent complexant, par exemple de l'acide polyacrylique permet d'obtenir une solution colloïdale présentant des particules ($D_{50}$) dont la taille est égale à 10 nm. Le potentiel zêta de la suspension s'élève à environ 65 mV.

2- Dépôt du film de cathode

Les particules de $LiMn_2O_4$ contenues dans la suspension sont par la suite déposées sur un la zone métallisée du substrat (Cf. fig. 2b). Le dépôt est réalisé localement du fait de l'utilisation d'un masque isolant (Cf. fig. 2b et 3). Le dépôt est réalisé en appliquant entre la zone métallisée du substrat sur laquelle sera réalisée le dépôt et une contre-électrode, tous deux immergés dans la suspension colloïdale, une tension de 100 V jusqu'à obtenir un dépôt de 5 $\mu$m d'épaisseur. Ce dépôt est ensuite séché pendant 1 heure à 90°C.

Le dépôt est ensuite compacté par une compression, puis recuit à 500°C pendant 900 secondes.

3- Préparation de la suspension colloïdale SPn

Pour réaliser la suspension colloïdale contenant des particules de l'électrolyte, on synthétise tout d'abord des poudres nanométriques du $Li_{1,3}Al_{0,3}Ti_{1,7}(PO_4)_3$ en utilisant le procédé décrit dans la publication « Thin-film lithium-ion battery derived from Li1,3Al0,3Ti1,7(PO4)3 sintered pellets » par Xiao et al, paru dans Trans. Nonferrous Me. Soc. China 16 (2006), p. 281-285. On dissout en quantité stoechiométrique le $Li(CH_3\text{-}COO).2H_2O$ et $Al(NO_3)_3.9H_2O$ dans $CH_3OCH_2CH_2OH$, puis on ajoute à ce mélange sous agitation $PO(OC_4H_9)_4$. Après avoir ajouté la quantité stoechiométrique d'eau déminéralisée pour l'hydrolyse des alkoxydes, la suspension obtenue est séchée à 140°C pendant 4 heures pour former un gel de $Li_{1,3}Al_{0,3}Ti_{1,7}(PO_4)_3$. Ce gel est par la suite calciné à 900°C pendant 2 heures et pour obtenir une poudre agglomérée de $Li_{1,3}Al_{0,3}Ti_{1,7}(PO_4)_3$ ; cette poudre est ensuite mise en suspension dans de l'éthanol avec une concentration égale à 20 g/l.

La suspension est introduite dans le bol d'un broyeur à billes préalablement rempli de billes en céramiques de diamètre 0,1 mm. Le broyage pendant 3 heures en présence d'un peu d'acide polyacrylique qui joue le rôle d'agent complexant permet d'obtenir une solution colloïdale présentant des particules dont la taille $D_{50}$ est égale à 15 nm. Le potentiel zêta de la suspension est de l'ordre de 60 mV.

### 4- Dépôt de la couche d'électrolyte

Les particules de $Li_{1,3}Al_{0,3}Ti_{1,7}(PO_4)_3$ obtenues dans la suspension sont par la suite déposées sur le dépôt de $LiMn_2O_4$, densifié, en appliquant entre le substrat et un contre-électrode, tous deux immergés dans la suspension colloïdale, une tension de 100 V jusqu'à obtenir un dépôt de 1,5 $\mu$m d'épaisseur.

La cathode ($LiMn_2O_4$) revêtue du film mince de nanoparticules d'électrolyte. On fait sécher la couche d'électrolyte à 90°C.

Le dépôt est ensuite compacté par une compression, puis recuit à 350°C pendant 900 secondes.

### 5- Dépôt du film d'anode

Le substrat avec les dépôts de cathode et d'électrolyte est ensuite placé dans une enceinte sous vide, et l'anode en lithium est déposée localement sur une surface couvrant sur l'électrolyte le vis-à-vis de la cathode ainsi que la terminaison électrique déposée sur le substrat.

Lorsqu'une anode en lithium métallique est utilisée, une couche d'encapsulation doit être déposée pour protéger la cellule batterie des agressions externes.

### Exemple 2 : fabrication d'un film d'anode

### 1- Préparation du substrat

On a approvisionné un feuillard d'aluminium de 15 $\mu$m d'épaisseur. Le feuillard est ensuite placé dans un dérouleur, et positionné sur un cadre de maintien, de manière à créer une structure rigide de maintien du feuillard en aluminium sans créer de froissement du feuillard. Ce cadre de maintien est conçu avec une surface externe isolante, mais avec la présence de contacts électriques à l'intérieur. Ces surfaces internes conductrices sont au contact du feuillard en aluminium et permettent de lui imposer un potentiel. Le feuillard d'aluminium dans son cadre est ensuite immergé dans un bain de nettoyage de la surface. Ce nettoyage est réalisé par des immersions dans un bain de lessive de chez NGL technologie sous ultrasons, suivi d'un rinçage à l'eau distillée.

Une fois la surface nettoyée, nous avons effectué un traitement d'électropolissage dans une solution ayant la composition chimique suivante: 80% d'éthanol absolu, 13,8% d'eau distillée, 6,2% d'acide perchlorique à 70%. L'électropolissage de l'aluminium a été réalisé avec une polarisation sous 15V avec une contre-électrode en plomb. Le bain de traitement a été refroidi pour éviter les échauffements liés aux fortes densités de courant. Pour une meilleure qualité de surface, d'autres formulations de bain peuvent être utilisées, comme par exemple, des bains à base de solutions de type EPS 1250 ou EPS 1300 fournies par la société EP-Systems.

Après le traitement d'électropolissage, la surface est rincée à l'eau distillée.

### 2- Préparation d'une suspension colloïdale SP-

Cette suspension colloïdale est réalisée sans ajouts de stabilisants, et ce, afin de garantir un excellent niveau de pureté de l'électrode. Pour cela, nous avons préparé une suspension colloïdale de $Li_4Ti_5O_{12}$ dans l'alcool par broyage dispersion de nanoparticules de $Li_4Ti_5O_{12}$.

Les nanoparticules de $Li_4Ti_5O_{12}$ ont été achetées chez Aldrich, puis broyées dans de l'alcool éthylique à une concentration de 10 g/l. Après cette étape de broyage-dispersion la suspension a été passée aux ultrasons puis elle a été laissée décantée. Nous avons prélevé uniquement le surnageant de la suspension après décantation afin d'être certain d'obtenir une suspension colloïdale de nanoparticules, sans agglomérats de taille supérieure à 100 nm.

Une suspension ne contenant pas de stabilisant a ainsi été obtenue. En effet, nous avons pu remarquer que la stabilité des nano colloïdes dépendait grandement de la taille des particules et de leur concentration dans la suspension. Lorsque la taille des particules avoisine la dizaine de nanomètres, elles peuvent être stables en suspensions sans ajout de stabilisants. La forte surface spécifique de ces particules et leur faible masse conduit à ce que le bilan des interactions conduit à ce que le système se comporte comme un gaz réel susceptible de se condenser en donnant naissance à un cristal colloïdal. Les dépôts électrophorétiques de ces nanoparticules nous permettent de condenser à la surface du substrat cette phase dite de cristal colloïdal.

3- Dépôt du film d'anode

Les particules de $Li_4Ti_5O_{12}$ ont été déposées en couche mince par électrophorèse sur le feuillard d'aluminium électro poli obtenu à l'étape 1 ci-dessus.

Les conditions de dépôt utilisées étaient de 10V/cm, ce qui a permis d'obtenir un dépôt compact d'environ 0,5 $\mu$m d'épaisseur après seulement trente secondes d'anaphorèse.

Le dépôt a ensuite été recuit à 500°C pendant 1 heure puis pressé sous 50 MPa.

On a ainsi obtenu une anode.

Une courbe de voltampérométrie cyclique a été tracée à 0,1 V/sec. sur cette électrode afin de valider ses propriétés d'insertion vis-à-vis des ions lithium. Une illustration de la courbe ainsi obtenue est donnée à la figure 23a.

Exemple 3 : fabrication d'un film d'anode

Le substrat est le même que dans l'exemple 2.

Le procédé de préparation de la suspension de particules SP- est similaire à celui de l'exemple 2 hormis que la suspension de particules de $Li_4Ti_5O_{12}$ a été diluée à 2g/l et que de l'acide citrique a été ajouté à la suspension à une concentration de $1.10{-}3$ M. La suspension a été mise sous ultrason, et le surnageant a été récupéré après décantation.

Le dépôt des particules de particules SP- est effectué dans les mêmes conditions que dans l'exemple 2. Le dépôt est ensuite séché, puis consolidé sous 50 MPa.

Une courbe de voltampérométrie cyclique a été tracée à 0,1 V/sec. sur cette électrode afin de valider ses propriétés d'insertion vis-à-vis des ions lithium. La courbe est présentée à la figure 23b.

L'électrode ainsi obtenue est entièrement solide et adhère sur le substrat sans avoir à ajouter de liants, type PVDF, dans le dépôt.

Exemple 4 - fabrication d'un film de cathode

1- Préparation d'une suspension colloïdale de particules SP+

Des poudres nanométriques de $LiMn_{1,5}Ni_{0,4}Cr_{0,1}O_4$ ont été synthétisées à l'aide de la méthode décrite ci-après :

Une poudre de $Li_2CO_3$ est dissoute par petite quantité dans un mélange d'acide citrique et d'éthylène glycol chauffé à 70°C. On observe un dégagement de $CO_2$ à chaque portion additionnée. La température du mélange est portée à 90°C, puis on ajoute ensuite en quantité stoechiométrique du $Mn(NO_3)_2.4H_2O$, du $Ni(NO_3)_2.6H_2O$ et du $Cr(NO_3)_2.9H_2O$ à cette dernière solution puis on augmente la température du mélange à 140°C jusqu'à l'obtention d'une masse dure bullée. Cette dernière est ensuite passée à l'étuve à 250°C jusqu'à l'obtention d'une poudre. La poudre obtenue est enfin calcinée à 800°C pendant 6 heures.

Ces nanopoudres ont été broyées et dispersées dans de l'alcool afin d'obtenir une suspension à 20 g/l de $LiMn_{1,5}Ni_{0,4}Cr_{0,1}O_4$. Le broyage dispersion a été conduit jusqu'à ce que la taille des particules en suspension atteigne 30 nm. Cette suspension a ensuite été diluée dans un solvant à base de type cétone afin d'obtenir une suspension à 5g/l.

Exemple 5 - fabrication d'un film d'électrolyte

1- Préparation d'une suspension colloïdale de particules SPn

Pour réaliser la suspension colloidale contenant des particules de l'électrolyte, on synthétise tout d'abord des poudres nanométriques du $Li_{1,3}Al_{0,3}Ti_{1,7}(PO_4)_3$ en utilisant le procédé décrit dans la publication "thin-film lithium-ion battery derived from Li1,3Al0,3Ti1,7(PO4)3 sintered pellets" par Xiao er al., paru dans Trans. Nonferrous Me. Soc. China 16 (2006), p. 281-285.

Les poudres nanométriques de $Li_{1,3}Al_{0,3}Ti_{1,7}(PO_4)_3$ ont été mises en suspension colloïdales dans l'alcool éthylique par broyage-dispersion. Aucun stabilisant n'a été ajouté à la suspension colloïdale, qui avait un extrait sec de 10 g/l. La suspension ainsi obtenue était parfaitement stable.

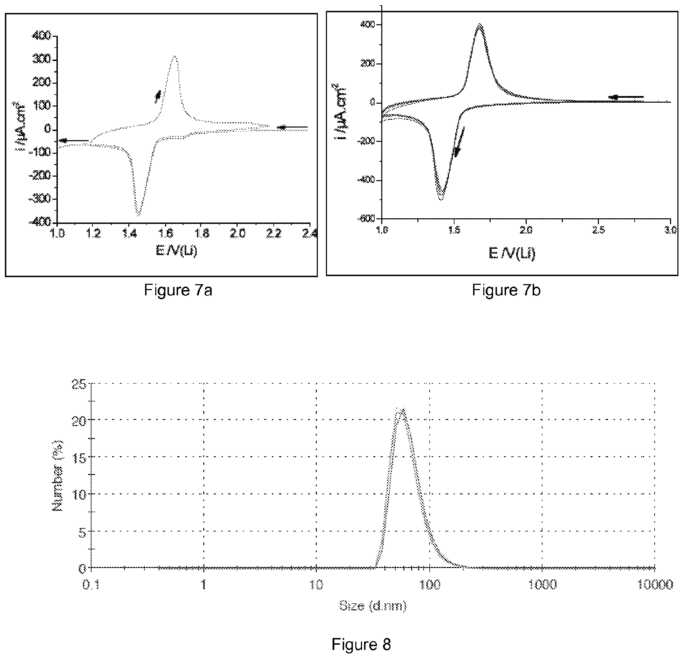

La distribution granulométrique des nanoparticules des suspensions colloïdales a été déterminée par DLS (dynamic light scattering - diffusion dynamique de la lumière) également appelée spectroscopie de corrélation de photons avec un appareil commercial Zetasizer de Malvern Instruments. Le principe de mesure est basé sur le mouvement brownien des particules en suspension. Cette technique de mesure quantifie la vitesse de diffusion des particules en solution, afin d'en déduire leur rayon hydrodynamique. Les mesures DLS présentées à la figure 8 illustrent la distribution de tailles de particules en suspension.

La taille moyenne des particules en suspension est de 60 nm. Comme précédemment, afin d'être certain de ne pas prélever d'agglomérats, nous travaillons quasi exclusivement avec les surnageants des suspensions après décantation.

Exemple 5 - Batterie en couche mince entièrement solide doté de collecteur entièrement en aluminium

1- Fabrication de la cathode :

A partir de la suspension colloïdale de nanopoudres de $LiMn_{1,5}Ni_{0,4}Cr_{0,1}O_4$ préparée dans l'exemple 2-a précédent, nous réalisons un dépôt par anaphorèse des nanoparticules de $LiMn_{1,5}Ni_{0,4}Cr_{0,1}O_4$ sur un substrat d'aluminium d'épaisseur initiale 15 $\mu$m qui a été amincît et dont la surface a été lissée et décapée par électropolissage. Les conditions de dépôt utilisées étaient de 90V/cm ce qui a permis d'obtenir un dépôt d'environ un micron après seulement quelques secondes d'anaphorèse.
Ce dépôt a ensuite été séché et densifié par un chauffage sous pression uniaxiale.

2- Fabrication de l'anode :

Nous avons réalisé une suspension colloïdale de nanoparticules de $Li_4Ti_5O_{12}$ et de nanoparticules de noir de carbone et cela sans ajouts de stabilisants, afin de garantir un excellent niveau de pureté de l'électrode. Cette suspension a été préparée dans l'alcool par broyage-dispersion de nanoparticules de $Li_4Ti_5O_{12}$ et de carbone. Les nanoparticules de $Li_4Ti_5O_{12}$ ont été achetées chez la société Aldrich, les nanoparticules de noir de carbone de type Ketjenblack de chez Akzo nobel, puis broyées ensembles dans de l'alcool éthylique avec une concentration de 10 g/l. Après cette étape de broyage-dispersion la suspension a été passée aux ultrasons puis elle a été laissée décanter. On a prélevé uniquement le surnageant de la suspension après décantation afin d'être certain d'obtenir une suspension colloïdale monodisperse de nanoparticules, sans agglomérats de tailles supérieurs à 100 nm.
A partir de cette suspension colloïdale nous réalisons un dépôt par anaphorèse des nanoparticules contenues dans la suspension sur un substrat d'aluminium d'épaisseur initiale 15 $\mu$m qui a été amincît et dont la surface a été lissée et décapée par électropolissage. Les conditions de dépôt utilisées étaient de 10V/cm ce qui a permis d'obtenir un dépôt d'environ d'un peu moins d'un micron après seulement quelques secondes d'anaphorèse.
Ce dépôt a ensuite été séché et densifié par un chauffage sous pression uniaxiale.

3- Assemblage de la cellule batterie :

Les deux électrodes ont ensuite été recouvertes d'un film mince d'électrolyte, déposé par électrophorèse à partir de la suspension décrite dans l'exemple 2-b. Ce film de nanoparticules de $Li_{1,3}Al_{0,3}Ti_{1,7}(PO_4)_3$ a été obtenu sous un champ de 10V/cm pendant 30 secondes.
Les deux demi-électrodes recouvertes du film mince de nanoparticules d'électrolyte sont ensuite assemblées en appliquant conjointement les deux faces de chacune des électrodes recouvertes d'électrolyte puis en leur faisant subir un traitement thermique à 300°C sous pression uniaxiale.
Nous avons ainsi réalisé une batterie en couche mince entièrement solide, dotée de collecteur entièrement en aluminium.

Exemple 6 - Synthèse de nanoparticules utilisables comme matériaux d'anode ou de cathode

a) $LiMn_{1,5}Ni_{0,4}Cr_{0,1}O_4$

On dissout une poudre de $Li_2CO_3$ par petite quantité dans un mélange d'acide citrique et d'éthylène glycol chauffée à 70°C. On observe un dégagement de $CO_2$ à chaque portion additionnée. La température du mélange est portée à 90°C, puis on ajoute ensuite en quantité stoechiométrique du $Mn(NO_3)_2.4H_2O$, du $Ni(NO_3)_2.6H_2O$ et du $Cr(NO_3)_2.9H_2O$ à cette dernière solution puis on augmente la température du mélange à 140°C jusqu'à obtention d'une masse dure bullée. Cette dernière est ensuite passée à l'étuve à 250°C jusqu'à obtention d'une poudre. La poudre obtenue est enfin calcinée à 800°C pendant 6h. La poudre obtenue peut être utilisé pour préparer des films de cathode dans des batteries de type Li-ion.

b) $LiMnPO_4$

On broie dans un mortier une poudre de $Li_3PO_4$ et une poudre $MnSO_4.4H_2O$ en quantité stoechiométrique. La poudre broyée obtenue est placée dans un autoclave à 190°C pendant 12h. Le produit obtenu est lavé, centrifugé puis séché à 40°C pendant une nuit. La poudre obtenue peut être utilisé pour préparer des films de cathode dans des batteries de type Li-ion.

c) LiFePO$_4$

On broie dans un mortier une poudre Li$_3$PO$_4$ et une poudre FeSO$_4$.7H$_2$O en quantité stoechiométrique. La poudre broyée obtenue est placée dans un autoclave à 190°C pendant 12h. Le produit obtenu est lavé, centrifugé puis séchée à 40°C pendant une nuit. La poudre obtenue peut être utilisé pour préparer des films de cathode dans des batteries de type Li-ion.

d) Li$_{2,9}$PO$_{3,3}$N$_{0,36}$/Li$_{2,9}$PO$_{3,3}$N$_{0,46}$(LIPON)

On place une poudre nanométrique de Li$_3$PO$_4$ non traitée thermiquement à haute température dans une nacelle en alumine placé dans un four tubulaire. La poudre est ensuite traitée thermiquement à 650°C pendant 2h sous atmosphère d'ammoniac. La poudre ainsi obtenue peut être utilisé pour préparer des films d'électrolyte dans des batteries de type Li-ion.

## Revendications

**1.** Procédé de fabrication de micro-batteries en couches minces entièrement solides, lesdites micro-batteries comprenant une couche de matériaux d'anode, dite couche d'anode, une couche de matériaux d'électrolyte solide, dite couche d'électrolyte, et une couche de matériaux de cathode, dite couche de cathode, en contact électrique avec un collecteur cathodique, **caractérisé en ce que**

- une première couche d'électrode, cathode ou anode, est déposée par électrophorèse sur un substrat qui est conducteur ou présentant au moins une zone conductrice, ledit substrat ou ladite au moins une zone conductrice pouvant servir comme collecteur du courant, anodique ou cathodique, de ladite électrode de la micro-batterie,
- la couche d'électrolyte est déposée par électrophorèse sur ladite première couche d'électrode,
- une seconde couche d'électrode, anode ou cathode, est déposée sur la couche

d'électrolyte par électrophorèse ou par un procédé de dépôt sous vide.

**2.** Procédé selon la revendication 1, **caractérisé en ce qu'**il comprend en outre au moins une étape dite de densification, de préférence une densification mécanique et/ou une densification thermique, pour augmenter la densité d'au moins une des couches, et de préférence de toutes les couches, déposées par électrophorèse, ladite étape de densification étant de préférence effectuée :

- après le dépôt de la couche de cathode et/ou après le dépôt de la couche d'électrolyte, si la couche d'anode est déposée par une technique autre que l'électrophorèse,
- après le dépôt de la couche d'anode si la couche d'anode est déposée par électrophorèse.

**3.** Procédé selon la revendication 1 ou 2, **caractérisé en ce que** ladite étape de densification est une étape de densification thermique effectuée à une température T$_R$ ne dépassant pas 0,7 fois la température de fusion ou de décomposition exprimée en °C, et de préférence ne dépassant pas 0,5 fois, et encore plus préférentiellement ne dépassant pas 0,3 fois, la température de fusion ou de décomposition, exprimée en °C, du matériau d'anode, de cathode ou d'électrolyte le plus fusible qui est soumis à ce traitement, et encore plus préférentiellement ne dépassant pas 600°C.

**4.** Procédé selon la revendication 3, **caractérisé en ce que** l'étape de densification thermique, et éventuellement aussi l'étape de densification mécanique, est réalisée sous vide ou sous gaz inerte.

**5.** Procédé de fabrication de batteries en couches minces entièrement solides selon l'une quelconque des revendications 1 à 4, comprenant les étapes de :

(a) Approvisionnement d'une première suspension colloïdale « *SP+* » contenant des particules « *P+* » dite de « matériaux de cathode » ;
(b) Approvisionnement d'une deuxième suspension colloïdale « *SPn* » de particules « *Pn* » dite de « matériaux d'électrolyte solide » ;
(c) Approvisionnement d'un substrat isolant revêtu totalement ou partiellement de surfaces conductrices ;
(d) Immersion du substrat, pouvant être localement épargné par un masque isolant, dans un bain de ladite suspension SP+ contenant des particules P+ de matériaux de cathode en présence d'une contre-électrode, suivi de l'application d'une tension électrique entre ledit premier substrat conducteur et ladite contre-électrode de manière à obtenir un dépôt électrophorétique contenant des particules P+ de matériaux de cathode sur ledit substrat de matériau conducteur, pour obtenir un premier produit intermédiaire BP+ ;

(e) Immersion dudit produit intermédiaire BP+, pouvant être localement épargné par un masque isolant, dans un bain de ladite suspension *SPn* de particules Pn de matériaux d'électrolyte en présence d'une contre-électrode, suivi de l'application d'une tension électrique entre ledit substrat et ladite contre-électrode de manière à obtenir un dépôt électrophorétique de particules Pn de matériaux d'électrolyte sur la surface de la couche de cathode dudit produit intermédiaire BP+, obtenant ainsi un second produit intermédiaire BP+Pn ;

(f) Dépôt d'une couche d'anode sur la couche d'électrolyte dudit produit intermédiaire BP+Pn, pouvant être localement épargné par un masque, soit par dépôt sous vide soit ou par électrophorèse à partir d'une troisième suspension colloïdale « *SP-* » contenant des particules « *P-* » dite de « matériaux d'anode », pour obtenir un troisième produit intermédiaire BP+PnP-, et éventuellement une étape supplémentaire de dépôt d'une couche de collecteur de courant anodique sur ladite couche d'anode dudit produit intermédiaire BP+PnP- obtenu;

**caractérisé en ce que** la taille moyenne $D_{50}$ des particules de matériau de cathode et/ou de matériau d'électrolyte solide et/ou, le cas échéant, de matériau d'anode présentes dans lesdites solution colloïdales déposés par électrophorèse est inférieure à 1 $\mu$m, de préférence inférieure à 100 nm et encore plus préférentiellement inférieure ou égale à 30 nm.

6. Procédé selon la revendication 5 **caractérisé en ce que** l'extrait sec de l'une au moins des suspensions *SP+, SP-* et/ou *SPn* est compris entre 2 et 20 g/L.

7. Procédé selon la revendication 5 ou 6 **caractérisé en ce que** l'une au moins des suspensions *SP+, SP-* et/ou *SPn* ne contient pas de stabilisant.

8. Procédé selon l'une quelconque des revendications 1 à 7, **caractérisé en ce que** lesdites couches de cathode, d'électrolyte et d'anode présentent une porosité inférieure à 20%, de préférence inférieure à 10% et encore plus préférentiellement inférieure à 5%.

9. Procédé selon l'une quelconque des revendications 1 à 8, **caractérisé en ce que** ladite couche de matériaux d'anode est déposée à partir d'une suspension de nanoparticules choisis parmi un ou plusieurs des matériaux suivants :

(i) les oxynitrures d'étain de formule typique $SnO_xN_y$;

(ii) les oxynitrures mixtes de silicium et étain de formule typique $Si_aSn_bO_yN_z$ avec a>0, b>0, a+b≤2, 0<y≤4, 0<z≤3, appelés aussi SiTON, et en particulier le $SiSn_{0,87}O_{1,2}N_{1,72}$ ; ainsi que les oxynitrures sous la forme $Si_aSn_bC_cO_yN_z$ avec a>0, b>0, a+b≤2, 0<c-10, 0<y<24, 0<z<17; $Si_aSn_bC_cO_yN_zX_n$ et $Si_aSn_bO_yN_zX_n$ avec Xn au moins un des éléments parmi F, Cl, Br, I, S, Se, Te, P, As, Sb, Bi, Ge, Pb.

(iii) les nitrures de type $Si_xN_y$, en particulier avec x=3 et y=4, $Sn_xN_y$ en particulier avec x=3 et y=4, $Zn_xN_y$ en particulier avec x=3 et y=4, $Li_{3-x}M_xN$ avec M=Co, Ni, Cu;

(iv) les oxydes $SnO_2$, $Li_4Ti_5O_{12}$, $SnB_{0,6}P_{0,4}O_{2,9}$.

10. Procédé selon l'une quelconque des revendications 1 à 9, **caractérisé en ce que** ladite couche de matériaux de cathode est déposée à partir d'une suspension de nanoparticules choisis parmi un ou plusieurs des matériaux suivants :

(i) les oxydes $LiMn_2O_4$, $LiCoO_2$, $LiNiO_2$, $LiMn_{1,5}Ni_{0,5}O_4$, $LiMn_{1,5}Ni_{0,5-x}X_xO_4$ où x est sélectionné parmi Al, Fe, Cr, Co, Rh, Nd, autres terres rares, et où 0 < x < 0,1, $LiFeO_2$, $LiMn_{1/3}Ni_{1/3}Co_{1/3}O_4$ ;

(ii) les phosphates $LiFePO_4$, $LiMnPO_4$, $LiCoPO_4$, $LiNiPO_4$, $Li_3V_2(PO_4)_3$ ;

(iii) toutes les formes lithiées des chalcogénides suivants : $V_2O_5$, $V_3O_8$, $TiS_2$, $TiO_yS_z$, $WO_yS_z$, $CuS$, $CuS_2$.

11. Procédé selon l'une quelconque des revendications 1 à 10, **caractérisé en ce que** ladite couche de matériaux d'électrolyte solide est déposée à partir d'une suspension de nanoparticules choisis parmi un ou plusieurs des matériaux suivants:

(i) les composés lithiés à base d'oxynitrure de lithium et de phosphore, appelés LiPON, sous forme $Li_xPO_yN_z$ avec x ~2,8 et 2y+3z ~7,8 et 0,16 ≤ z ≤ 0,4, et en particulier le $Li_{2,9}PO_{3,3}N_{0,46}$, mais également toutes les variantes sous forme $Li_wPO_xN_yS_z$ avec $2x+3y+2z = 5=w$ et $3,2 \leq x \leq 3,8$, $0,13 \leq y \leq 0,4$, $0 \leq z \leq 0,2$, $2,9 \leq w \leq 3,3$ ou sous forme $Li_tP_xAl_yO_uN_vS_w$ avec $5x+3y=5$, $2u+3v+2w=5+t$, $2,9 \leq t \leq 3,3$, $0,94 \leq x \leq 0,84$, $0,094 \leq y \leq 0,26$, $3,2 \leq u \leq 3,8$, $0,133 \leq v \leq 0,46$, $0 \leq w \leq 0,2$ ;

(ii) les composés lithiés à base d'oxynitrure de lithium, de phosphore et de silicium, appelés LiSiPON, et en particulier le $Li_{1,9}Si_{0,28}P_{1,0}O_{1,1}N_{1,0}$ ;

(iii) les oxynitrures de lithium de types LiBON, LiBSO, LiSiPON, LiSON, thio-LiSiCON, LiPONB, où B, P et S représentent respectivement le bore, le phosphore et le soufre;

(iv) les composés $La_{0,51}Li_{0,34}Ti_{2,94}$, $Li_{3,4}V_{0,4}Ge_{0,6}O_4$, $Li_2O-Nb_2O_5$, $LiAlGaSPO_4$ ; les formulations à base de $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ où M = Ge, Ti, et/ou Hf, et où $0 < x < 1$, $Li_{1+x+y}Al_xTi_{2-x}Si_yP_{3-y}O_{12}$ (où $0 \leq x \leq 1$ et $0 \leq y \leq 1$), $Li_{1+x+z}M_x(Ge_{1-y}Ti_y)_{2-x}Si_zP_{3-z}O_{12}$ où $0 \leq x \leq 0,8$ ; $0 \leq y \leq 1,0$ ; $0 \leq z \leq 0,6$, et en particulier les formulations $4,9LiI-34,1Li_2O-61B_2O_3$, $0,30Li_2S-0,26B_2S_3-0,44LiI$, $60Li_2S-40SiS_2$, $0,02Li_3PO_4-0,98(Li_2S-SiS_2)$, $2(Li_{1,4}Ti_2Si_{0,4}P_{2,6}O_{12})-AlPO_4$, $0,7Li_2S-0,3P_2S_5$.

12. Batterie en couches minces entièrement solides susceptible d'être fabriquée par le procédé selon l'une quelconque des revendications 1 à 11, comprenant un empilement successif des couches suivantes :

- une couche de collecteur de courant cathodique,
- une couche cathodique,
- une couche d'électrolyte,
- une couche anodique,
- une couche de collecteur de courant anodique.

13. Batterie selon la revendication 12, **caractérisée en ce que** toutes les couches de collecteur de courant cathodique et anodique sont en aluminium, de préférence en feuille d'aluminium électro-polie.

14. Batterie selon la revendication 12 ou 13, **caractérisée en ce que** la couche d'électrolyte recouvre, au moins sur un côté, la tranche des couches d'anodes et de cathode.

15. Batterie selon l'une quelconque des revendication 12 à 14, **caractérisée en ce qu'**au moins une desdites couches de cathode, d'électrolyte et d'anode, et de préférence toutes les trois, présentent une porosité inférieure à 20%, de préférence inférieure à 10% et encore plus préférentiellement inférieure à 5%.

**Patentansprüche**

1. Verfahren zur Herstellung von reinen Festkörper-Dünnschicht-Mikrobatterien, wobei die Mikrobatterien eine Anodenmaterialschicht, Anodenschicht genannt, eine Festkörperelektrolytmaterialschicht, Elektrolytschicht genannt, und eine Kathodenmaterialschicht, Kathodenschicht genannt, in elektrischem Kontakt mit einem Kathodenkollektor umfassen, **dadurch gekennzeichnet, dass**

- eine erste Elektrodenschicht, Kathode oder Anode, durch Elektrophorese auf einem Substrat abgeschieden wird, das leitend ist oder wenigstens einen leitenden Bereich aufweist, wobei das Substrat oder der wenigstens eine leitende Bereich als Anoden- oder Kathoden-Stromkollektor der Elektrode der Mikrobatterie dienen kann,
- die Elektrolytschicht durch Elektrophorese auf der ersten Elektrodenschicht abgeschieden wird,
- eine zweite Elektrodenschicht, Anode oder Kathode, durch Elektrophorese oder durch ein Vakuumabscheideverfahren auf der Elektrolytschicht abgeschieden wird.

2. Verfahren nach Anspruch 1, **dadurch gekennzeichnet, dass** es weiter wenigstens einen so genannten Verdichtungsschritt umfasst, vorzugsweise eine mechanische Verdichtung und/oder eine thermische Verdichtung, um die Dichte von wenigstens einer der Schichten, und vorzugsweise von allen den Schichten, die durch Elektrophorese abgeschiedenen wurden, zu erhöhen, wobei der Verdichtungsschritt vorzugsweise durchgeführt wird:

- nach dem Abscheiden der Kathodenschicht und/oder nach dem Abscheiden der Elektrolytschicht, wenn die Anodenschicht durch eine andere Technik als die Elektrophorese abgeschieden wird,
- nach dem Abscheiden der Anodenschicht, wenn die Anodenschicht durch Elektrophorese abgeschieden wird.

3. Verfahren nach Anspruch 1 oder 2, **dadurch gekennzeichnet, dass** der Verdichtungsschritt ein Schritt der thermischen Verdichtung ist, die bei einer Temperatur $T_R$ durchgeführt wird, die das 0,7-fache der in °C ausgedrückten Schmelz- oder Zersetzungstemperatur nicht übersteigt, und vorzugsweise das 0,5-fache nicht übersteigt, und noch stärker bevorzugt das 0,3-fache der in °C ausgedrückten Schmelz- oder Zersetzungstemperatur des am leichtesten schmelzenden Anoden-, Kathoden- oder Elektrolytmaterials, das dieser Behandlung unterzogen wird, nicht übersteigt, und noch stärker bevorzugt 600 °C nicht übersteigt.

4. Verfahren nach Anspruch 3, **dadurch gekennzeichnet, dass** der Schritt der thermischen Verdichtung, und gegebenenfalls auch der Schritt der mechanischen Verdichtung, unter Vakuum oder unter Inertgas ausgeführt wird.

5. Verfahren zur Herstellung von reinen Festkörper-Dünnschichtbatterien nach einem der Ansprüche 1 bis 4, umfassend die Schritte des:

(a) Beschaffens einer ersten kolloidalen Suspension "*SP*+", die "*P*+" Teilchen enthält, "Kathodenmaterial" genannt;

(b) Beschaffens einer zweiten kolloidalen Suspension "*SPn*" mit "*Pn*" Teilchen, "Festkörperelektrolytmaterial" genannt;

(c) Beschaffens eines isolierenden Substrats, das vollständig oder teilweise mit leitenden Oberflächen beschichtet ist;

(d) Eintauchens, in Gegenwart einer Gegenelektrode, des Substrats, das stellenweise durch eine isolierende Maske ausgespart sein kann, in ein Bad der P+ Kathodenmaterialteilchen enthaltenden Suspension *SP*+, gefolgt vom Anlegen einer elektrischen Spannung zwischen dem ersten leitenden Substrat und der Gegenelektrode, derart, dass eine P+ Kathodenmaterialteilchen enthaltende elektrophoretische Abscheidung auf dem leitenden Materialsubstrat erhalten wird, um ein erstes Zwischenprodukt BP+ zu erhalten;

(e) Eintauchens, in Gegenwart einer Gegenelektrode, des Zwischenprodukts BP+, das stellenweise durch eine isolierende Maske ausgespart sein kann, in ein Bad der Suspension *SPn* mit Pn Elektrolytmaterialteilchen, gefolgt vom Anlegen einer elektrischen Spannung zwischen dem Substrat und der Gegenelektrode, derart, dass eine elektrophoretische Abscheidung von *Pn* Elektrolytmaterialteilchen auf der Oberfläche der Kathodenschicht des Zwischenprodukts BP+ erhalten wird, wobei so ein zweites Zwischenprodukt BP+Pn erhalten wird;

(f) Abscheidens einer Anodenschicht auf der Elektrolytschicht des Zwischenprodukts BP+Pn, das stellenweise durch eine Maske ausgespart sein kann, entweder durch Vakuumabscheidung oder durch Elektrophorese ausgehend von einer dritten kolloidalen Suspension "*Sp*-", die "*P*-" Teilchen enthält, "Anodenmaterial" genannt, um ein drittes Zwischenprodukt BP+PnP- zu erhalten, und gegebenenfalls einen zusätzlichen Schritt des Abscheidens einer Anodenstromkollektorschicht auf der Anodenschicht des Zwischenprodukts BP+PnP-, das erhalten wurde;

**dadurch gekennzeichnet, dass** die mittlere Größe $D_{50}$ der Kathodenmaterial- und/oder der Festkörperelektrolytmaterial- und/oder gegebenenfalls der Anodenmaterialteilchen, die in den durch Elektrophorese abgeschiedenen kolloidalen Suspensionen vorhanden sind, kleiner als 1 $\mu$m, vorzugsweise kleiner als 100 nm und noch stärker bevorzugt kleiner oder gleich 30 nm ist.

6. Verfahren nach Anspruch 5, **dadurch gekennzeichnet, dass** der Trockenmassegehalt von wenigstens einer der Suspensionen *SP*+, *SP*- und/oder *SPn* im Bereich zwischen 2 und 20 g/L liegt.

7. Verfahren nach Anspruch 5 oder 6, **dadurch gekennzeichnet, dass** wenigstens eine der Suspensionen *SP*+, *SP*- und/oder *SPn* keinen Stabilisator enthält.

8. Verfahren nach einem der Ansprüche 1 bis 7, **dadurch gekennzeichnet, dass** die Kathoden-, Elektrolyt- und Anodenschichten eine Porosität von weniger als 20 %, vorzugsweise weniger als 10 %, und noch stärker bevorzugt weniger als 5 % aufweisen.

9. Verfahren nach einem der Ansprüche 1 bis 8, **dadurch gekennzeichnet, dass** die Anodenmaterialschicht ausgehend von einer Suspension von Nanoteilchen abgeschieden wird, die aus einem oder mehreren der folgenden Materialien ausgewählt sind:

(i) den Zinn-Oxynitriden der typischen Formel $SnO_xN_y$;

(ii) den gemischten Silizium- und Zinn-Oxynitriden der typischen Formel $Si_aSr_bO_yN_z$, wobei a > 0, b > 0, a + b $\leq$ 2, 0 < y $\leq$ 4, 0 < z $\leq$ 3, auch SiTON genannt, und insbesondere $SiSn_{0,87}O_{1,2}N_{1,72}$; sowie den Oxynitriden in der Form $Si_aSn_bC_cO_yN_z$, wobei a > 0, b > 0, a + b $\leq$ 2, 0 < c - 10, 0 < y < 24, 0 < z < 17; $Si_aSn_bC_cO_yN_zX_n$ und

$Si_aSn_bO_yN_zX_n$, wobei Xn wenigstens eines der Elemente ist aus F, Cl, Br, I, S, Se, Te, P, As, Sb, Bi, Ge, Pb;
(iii) den Nitriden vom Typ $Si_xN_y$, insbesondere wobei x = 3 und y = 4, $Sn_xN_y$, insbesondere wobei x = 3 und y = 4, $Zn_xN_y$, insbesondere wobei x = 3 und y = 4, $Li_{3-x}M_xN$, wobei M = Co, Ni, Cu;
(iv) den $SnO_2$-, $Li_4Ti_5O_{12}$-, $SnB_{0,6}P_{0,4}O_{2,9}$-Oxiden.

10. Verfahren nach einem der Ansprüche 1 bis 9, **dadurch gekennzeichnet, dass** die Kathodenmaterialschicht ausgehend von einer Suspension von Nanoteilchen abgeschieden wird, die aus einem oder mehreren der folgenden Materialien ausgewählt sind:

(i) den $LiMn_2O_4$-, $LiCoO_2$-, $LiNiO_2$-, $LiMn_{1,5}Ni_{0,5}O_4$-, $LiMn_{1,5}Ni_{0,5-x}X_xO_4$-, wobei x aus Al, Fe, Cr, Co, Rh, Nd, anderen seltenen Erden ausgewählt ist und wobei 0 < x < 0,1, $LiFeO_2$-, $LiMn_{1/3}Ni_{1/3}Co_{1/3}O_4$-Oxiden;
(ii) den $LiFePO_4$-, $LiMnPO_4$-, $LiCoPO_4$-, $LiNiPO_4$-, $Li_3V_2(PO_4)_3$-Phosphaten;
(iii) allen lithiierten Formen der folgenden Chalkogenide: $V_2O_5$, $V_3O_8$, $TiS_2$, $TiO_yS_z$, $WO_yS_z$, $CuS$, $CuS_2$.

11. Verfahren nach einem der Ansprüche 1 bis 10, **dadurch gekennzeichnet, dass** die Festkörperelektrolytmaterialschicht ausgehend von einer Suspension von Nanoteilchen abgeschieden wird, die aus einem oder mehreren der folgenden Materialien ausgewählt sind:

(i) den lithiierten Verbindungen auf Basis von Lithium- und Phosphor-Oxynitrid, LiPON genannt, in der Form $Li_xPO_yN_z$, wobei x ~2,8 und 2y + 3z ~7,8 und $0,16 \leq z \leq 0,4$, und insbesondere $Li_{2,9}PO_{3,3}N_{0,46}$, aber ebenfalls allen Varianten in der Form $Li_wPO_xN_yS_z$, wobei 2x + 3y + 2z = 5 = w und $3,2 \leq x \leq 3,8$, $0,13 \leq y \leq 0,4$, $0 \leq z \leq 0,2$, $2,9 \leq w \leq 3,3$, oder in der Form $Li_tP_xAl_yO_uN_vS_w$, wobei 5x + 3y = 5, 2u + 3v + 2w = 5 + t, $2,9 \leq t \leq 3,3$, $0,94 \leq x \leq 0,84$, $0,094 \leq y \leq 0,26$, $3,2 \leq u \leq 3,8$, $0,13 \leq v \leq 0,46$, $0 \leq w \leq 0,2$;
(ii) den lithiierten Verbindungen auf Basis von Lithium-, Phosphor- und Silizium-Oxynitrid, LiSiPON genannt, und insbesondere $Li_{1,9}Si_{0,28}P_{1,0}O_{1,1}N_{1,0}$;
(iii) den Lithium-Oxynitriden der Typen LiBON, LiBSO, LiSiPON, LiSON, Thio-LiSiCON, LiPONB, wobei B, P und S jeweils für Bor, Phosphor und Schwefel stehen;
(iv) den $La_{0,51}Li_{0,34}Ti_{2,94}$-, $Li_{3,4}V_{0,4}Ge_{0,6}O_4$-, $Li_2O$-$Nb_2O_5$-, $LiAlGaSPO_4$-Verbindungen;

den Formulierungen auf Basis von $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$, wobei M = Ge, Ti, und/oder Hf, und wobei 0 < x < 1, $Li_{1+x+y}Al_xTi_{2-x}Si_yP_{3-y}O_{12}$ (wobei $0 \leq x \leq 1$ und $0 \leq y \leq 1$), $Li_{1+x+z}M_x(Ge_{1-y}Ti_y)_{2-x}Si_zP_{3-z}O_{12}$, wobei $0 \leq x \leq 0,8$; $0 \leq y \leq 1,0$; $0 \leq z \leq 0,6$, und insbesondere den Formulierungen 4,9Lil-34,1$Li_2O$-61$B_2O_3$, 0,30$Li_2S$-0,26B2$S_3$-0,44Lil, 60$Li_2S$-40Si$S_2$, 0,02$Li_3PO_4$-0,98($Li_2S$-Si$S_2$), 2($Li_{1,4}Ti_2Si_{0,4}P_{2,6}O_{12}$)-Al$PO_4$, 0,7$Li_2S$-0,3$P_2S_5$.

12. Reine Festkörper-Dünnschichtbatterie, die geeignet ist, durch das Verfahren nach einem der Ansprüche 1 bis 11 hergestellt zu werden, umfassend eine aufeinanderfolgende Stapelung der folgenden Schichten:

- eine Kathodenstromkollektorschicht,
- eine Kathodenschicht,
- eine Elektrolytschicht,
- eine Anodenschicht,
- eine Anodenstromkollektorschicht.

13. Batterie nach Anspruch 12, **dadurch gekennzeichnet, dass** alle die Kathoden- und Anodenstromkollektorschichten aus Aluminium, vorzugweise aus elektropolierter Aluminiumfolie sind.

14. Batterie nach Anspruch 12 oder 13, **dadurch gekennzeichnet, dass** die Elektrolytschicht wenigstens auf einer Seite den Rand der Anoden- und Kathodenschichten bedeckt.

15. Batterie nach einem der Ansprüche 12 bis 14, **dadurch gekennzeichnet, dass** wenigstens eine der Kathoden-, Elektrolyt- und Anodenschichten, und vorzugsweise alle drei, eine Porosität von weniger als 20 %, vorzugsweise weniger als 10 %, und noch stärker bevorzugt weniger als 5 % aufweisen.

**Claims**

1. Method for manufacturing fully solid thin-film micro-batteries, said micro-batteries comprising a layer of anode materials, referred to as anode layer, a layer of solid electrolyte materials, referred to as electrolyte layer, and a layer of cathode materials, referred to as cathode layer, in electrical contact with a cathode collector, **characterised in that**

   - a first electrode layer, cathode or anode, is deposited by electrophoresis on a substrate that is conductive or that has at least one conductive zone, said substrate or said at least one conductive zone able to serve as a current collector, anodic or cathodic, of said electrode of the micro-battery,
   - the electrolyte layer is deposited by electrophoresis on said first electrode layer,
   - a second electrode layer, anode or cathode, is deposited on the electrolyte layer by electrophoresis or by a vacuum deposition method.

2. Method according to claim 1, **characterised in that** it further comprises at least one so-called step of densification, preferably a mechanical densification and/or a thermal densification, in order to increase the density of at least one of the layers, and preferably of all the layers, deposited by electrophoresis, said step of densification being preferably carried out:

   - after the deposition of the cathode layer and/or after the deposition of the electrolyte layer, if the anode layer is deposited by a technique other than electrophoresis,
   - after the deposition of the anode layer if the anode layer is deposited by electrophoresis.

3. Method according to claim 1 or 2, **characterised in that** said step of densification is a step of thermal densification carried out at a temperature $T_R$ that does not exceed 0.7 times the melting or decomposition temperature expressed in °C, and preferably that does not exceed 0.5 times, and more preferably that does not exceed 0.3 times, the melting or decomposition temperature, expressed in °C, of the most meltable anode, cathode or electrolyte material which is subjected to this treatment, and more preferably that does not exceed 600°C.

4. Method according to claim 3, **characterised in that** the step of thermal densification, and optionally also the step of mechanical densification, is carried out in a vacuum or under inert gas.

5. Method for the manufacturing of fully solid thin-film batteries according to any of claims 1 to 4, comprising the steps of:

   (a) Supplying a first colloidal suspension "SP+" containing "P+" particles referred to as "cathode materials";
   (b) Supplying a second colloidal suspension "SPn" of "Pn" particles referred to as "solid electrolyte materials";
   (c) Supplying an insulating substrate partially or entirely coated with conductive surfaces;
   (d) Immersing of the substrate, able to be locally spared by an insulating mask, in a bath of said suspension SP+ containing P+ particles of cathode materials in the presence of a counter-electrode, followed by the application of an electrical voltage between said first conductive substrate and said counter-electrode in such a way as to obtain an electrophoretic deposition containing P+ particles of cathode materials on said conductive material substrate, in order to obtain a first intermediate product BP+;
   (e) Immersing of said intermediate product BP+, that can be locally spared by an insulating mask, in a bath of said suspension SPn of Pn particles of electrolyte materials in the presence of a counter-electrode, followed by the application of an electrical voltage between said substrate and said counter-electrode in such a way as to obtain an electrophoretic deposition of Pn particles of electrolyte materials on the surface of the cathode layer of said intermediate product BP+, obtained as such a second intermediate product BP+Pn;
   (f) Deposition of an anode layer on the electrolyte layer of said intermediate product BP+Pn, that can be locally spared by a mask, either by vacuum deposition or by electrophoresis using a third colloidal suspension "SP-" containing "P-" particles referred to as "anode materials", in order obtain a third intermediate product BP+PnP-, and optionally an additional step of deposition of a layer of anode current collector on said anode layer of said intermediate product BP+PnP- obtained; **characterised in that** the average size $D_{50}$ of the cathode material particles and/or of solid electrolyte material and/or, where applicable, of the anode material present in said colloidal solution deposited by electrophoresis is less than 1 $\mu$m, preferably less than 100 nm and more preferably less than or equal to 30 nm.

6. Method according to claim 5 **characterised in that** the dry extract of at least one of the suspensions SP+, SP- and/or SPn is between 2 and 20 g/L.

**7.** Method according to claim 5 or 6 **characterised in that** at least one of the suspensions SP+, SP- and/or SPn does not contain a stabiliser.

**8.** Method according to any of claims 1 to 7, **characterised in that** said cathode, electrolyte and anode layers have a porosity less than 20%, preferably less than 10% and more preferably less than 5%.

**9.** Method according to any of claims 1 to 8, **characterised in that** said layer of anode materials is deposited using a suspension of nanoparticles chosen from one or several of the following materials:

(i) oxinitrides of tin having typical formula $SnO_xN_y$;

(ii) mixed oxinitrides of silicon and tin having typical formula $Si_aSn_bO_yN_z$ with a>0, b>0, a+b≤2, 0<y≤4, 0<z≤3, also called SiTON, and in particular $SiSn_{0.87}O_{1.2}N_{1.72}$; as well as oxinitrides in the form $Si_aSn_bC_cO_yN_z$ with a>0, b>0, a+b≤2, 0<c-10, 0<y<24, 0<z<17; $Si_aSn_bC_cO_yN_zX_n$ and $Si_aSn_bO_yN_zX_n$ with Xn at least one of the elements from F, Cl, Br, I, S, Se, Te, P, As, Sb, Bi, Ge, Pb.

(iii) nitrides of the $Si_xN_y$ type, in particular with x=3 and y=4, $Sn_xN_y$ in particular with x=3 and y=4, $Zn_xN_y$, in particular with x=3 and y=4, $Li_{3-x}M_xN$ with M=Co, Ni, Cu;

(iv) oxides $SnO_2$, $Li_4Ti_5O_{12}$, $SnB_{0.6}P_{0.4}O_{2.9}$.

**10.** Method according to any of claims 1 to 9, **characterised in that** said layer of cathode materials is deposited using a suspension of nanoparticles chosen from one or several of the following materials:

(i) oxides $LiMn_2O_4$, $LiCoO_2$, $LiNiO_2$, $LiMn_{1.5}Ni_{0.5}O_4$, $LiMn_{1.5}Ni_{0.5-x}X_xO_4$ where x is selected from Al, Fe, Cr, Co, Rh, Nd, other rare earths, and where 0 < x < 0.1, $LiFeO_2$, $LiMn_{1/3}Ni_{1/3}Co_{1/3}O_4$ ;

(ii) phosphates $LiFePO_4$, $LiMnPO_4$, $LiCoPO_4$, $LiNiPO_4$, $Li_3V_2(PO_4)_3$;

(iii) all of the lithiated forms of the following chalcogenides: $V_2O_5$, $V_3O_8$, $TiS_2$, $TiO_yS_z$, $WO_yS_z$, CuS, $CUS_2$.

**11.** Method according to any of claims 1 to 10, **characterised in that** said layer of solid electrolyte materials is deposited using a suspension of nanoparticles chosen from one or several of the following materials:

(i) lithiated compounds with an oxinitride base of lithium and phosphorus, called LiPON, in the form $Li_xPO_yN_z$ with x -2.8 and 2y+3z ~7.8 and 0.16 ≤ z ≤ 0.4, and in particular $Li_{2.9}PO_{3.3}N_{0.46}$, but also all of the variants in the form $Li_wPO_xN_yS_z$ with 2x+3y+2z = 5=w and 3.2 ≤ x ≤ 3.8, 0.13 ≤ y ≤ 0.4, 0 ≤ z ≤ 0.2, 2.9 ≤ W ≤ 3.3 or in the form $Li_tP_xAl_yO_uN_vS_w$ with 5x+3y=5, 2u+3v+2w=5+t, 2.9≤t≤3.3, 0.94≤x≤0.84, 0.094≤y≤0.26, 3.2≤u≤3.8, 0.13≤v≤0.45. 0≤w≤0.2;

(ii) lithiated compounds with an oxinitride base of lithium, phosphorus and silicon, called LiSiPON, and in particular le $Li_{1.9}Si_{0.28}P_{1.0}O_{1.1}N_{1.0}$;

(iii) oxinitrides of lithium of the LiBON, LiBSO, LiSiPON, LiSON, thio-LiSiCON, LiPONB types, where B, P and S represent respectively boron, phosphorus and sulphur;

(iv) compounds $La_{0.51}Li_{0.34}Ti_{2.94}$, $Li_{3.4}V_{0.4}Ge_{0.6}O_4$, $Li_2O$-$Nb_2O_5$, $LiAlGaSPO_4$; formulations with a base of $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3.6}G_{0.6}V_{0.4}O_4$, $LiTi_2(PO_4)_3$, $Li_{0.35}La_{0.55}TiO_3$, $Li_{3.25}Ge_{0.25}P_{0.25}S_4$, $Li_{1.3}Al_{0.3}Ti_{1.7}(PO_4)_3$, $Li_{1+x}Al_xM_{2-x}(PO_4)_3$ where M = Ge, Ti, and/or Hf, and where 0 < x < 1, $Li_{1+x+y}Al_xTi_{2-x}SiP_{3-y}O_{12}$ (where 0≤x≤1 and 0≤y≤1), $Li_{1+x+z}M_x(Ge_{1-y}Ti_y)_{2-x}Si_zP_{3-z}O_{12}$ where 0≤ x ≤0.8 ; 0 ≤ y ≤ 1.0; 0 ≤ z ≤ 0.6, and in particular formulations $4.9LiI$-$34.1Li_2O$-$61B_2O_3$, $0.30Li_2S$-$0.26B_2S_3$-$0.44LiI$, $60Li_2S$-$40SiS_2$, $0.02Li_3PO_4$-$0.98(Li_2S$-$SiS_2)$, $2(Li_{1.4}Ti_2Si_{0.4}P_{2.6}O_{12})$-$AlPO_4$, $0.7Li_2S$-$0.3P_2S_5$.

**12.** Fully solid thin-film battery able to be manufactured by the method according to any of claims 1 to 11, comprising a successive stack of the following layers:

- a cathodic current collector layer,
- a cathodic layer,
- an electrolyte layer,
- an anodic layer,
- an anodic current collector layer.

**13.** Battery according to claim 12, **characterised in that** all of the cathodic and anodic current collector layers are made of aluminium, preferably of electro-polished aluminium sheet.

**14.** Battery according to claim 12 or 13, **characterised in that** the electrolyte layer covers, at least on one side, the edge of the anode and cathode layers.

15. Battery according to any of claims 12 to 14, **characterised in that** at least one of said cathode, electrolyte and anode layers, and preferably all three, have a porosity less than 20%, preferably less than 10% and more preferably less than 5%.

Figure 1 (a)

Figure 1 (b)

Figure 1 (c)

Figure 1 (d)

Figure 1 (e)

Figure 2a

Figure 2b

Figure 2c

Figure 2d

Figure 3

| Réaliser une suspension colloïdale des matériaux à déposer |
|---|

↓

| Mettre en contact la surface à revêtir et la suspension colloïdale |
|---|

↓

| Appliquer un champ électrique entre la surface à revêtir et une contre-électrode également située dans la suspension colloïdale le temps nécessaire pour obtenir la quantité déposée souhaitée |
|---|

↓

| Sécher le revêtement |
|---|

↓

| Fritter et/ou compacter le revêtement |
|---|

Figure 4

Figure 5a

Figure 5b

Figure 5c

Figure 5d

Figure 5e

Figure 5f

Figure 5

76

77

Figure 6a

78

Figure 6b

Figure 6c

Densité relative

1

0,92 — Elimination de la porosité fermée

Elimination de la porosité ouverte

0,65 —

Formation des ponts entre grains

0,55 —

Temps

Figure 6d

EP 2 774 195 B1

Figure 7a

Figure 7b

Figure 8

## RÉFÉRENCES CITÉES DANS LA DESCRIPTION

**Documents brevets cités dans la description**

- US 7662265 B
- US 6887361 B
- US 2007184345 A
- WO 2007061928 A
- US 2008286651 A
- WO 2010011569 A
- US 7790967 B
- JP 4501247 B
- JP 2002042792 A

**Littérature non-brevet citée dans la description**

- **W. LIU ; G.C. FARRINGTON ; F. CHAPUT ; B. DUNN.** Synthesis and Electrochemical Studies of Spinel Phase LiMn2O4 Cathode Materials Prepared by the Pechini Process. *J. Electrochem. Soc.,* 1996, vol. 143 (3
- **XIAO et al.** Thin-film lithium-ion battery derived from Li1,3Al0,3Ti1,7(PO4)3 sintered pellets. *Trans. Non-ferrous Me. Soc. China,* 2006, vol. 16, 281-285
- **XIAO.** thin-film lithium-ion battery derived from Li1,3Al0,3Ti1,7(PO4)3 sintered pellets. *Trans. Non-ferrous Me. Soc. China,* 2006, vol. 16, 281-285